(19) Europäisches Patentamt
European Patent Office
Office européen des brevets

(11) Publication number: 0 119 078 B1

(12) # EUROPEAN PATENT SPECIFICATION

(45) Date of publication of patent specification: 15.11.89

(51) Int. Cl.$^4$: C 08 F 2/32, C 08 F 20/56

(21) Application number: 84301604.9

(22) Date of filing: 09.03.84

(54) **An improved process for producing a polymer water-in-oil emulsion.**

(30) Priority: 11.03.83 US 474420

(43) Date of publication of application: 19.09.84 Bulletin 84/38

(45) Publication of the grant of the patent: 15.11.89 Bulletin 89/46

(84) Designated Contracting States: DE FR GB

(56) References cited:
GB-A-2 116 571
US-A-3 414 547

(73) Proprietor: UNION CARBIDE CORPORATION
39 Old Ridgebury Road
Danbury Connecticut 06817 (US)

(72) Inventor: Fan, You-Ling
3 Heritage Court
East Brunswick, NJ 08816 (US)
Inventor: Brode, George Lewis
653 Carlene Drive
Bridgewater, NJ 08807 (US)
Inventor: Rosen, Meyer Robert
108 Rockland Lane
Spring Valley, NY 10977 (US)

(74) Representative: Baverstock, Michael George Douglas et al
BOULT, WADE & TENNANT 27 Furnival Street
London, EC4A 1PQ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 119 078 B1

**Description**

This invention relates to a process for producing a polymer water-in-oil emulsion; and more particularly and in a preferred embodiment, to a process for producing a water-in-oil emulsion of a linear, high molecular weight polymer.

Water-in-oil emulsion polymerization processes, in which a water-soluble monomer is emulsified in an oil phase and polymerized therein, are well known in the art. For example, US—A—3,284,393 describes such a process wherein water-soluble monomers are polymerized to high molecular weight polymers or copolymers utilizing a water-in-oil emulsion polymerization procedure. In the polymerization process described in said patent, one or a plurality of water-soluble monomers, or an aqueous solution thereof, are emulsified in an oil phase by means of a water-in-oil emulsifier and emulsion polymerized under free radical forming conditions to form a polymeric latex in which the oil phase is the dispersion medium.

A water-in-oil emulsion of a polymer is produced by such a water-in-oil emulsion polymerization process, from which may be formed an aqueous solution of such polymer by inverting the emulsion with an inverting surfactant. Such "inverse emulsion polymerization" processes are an important part of the commercial production of certain types of water-soluble polymers where a liquid containing a high concentration of polymer is desired. For example, many anionic polymeric flocculants are high molecular weight, water-soluble polymers. The water-in-oil emulsion polymerization route to such polymers is the most significant commercially viable method that provides a liquid product containing a high loading (concentration) of such polymers. A liquid product is preferred in commercial flocculation for its ease in handling, transporting and rapid dissolution in water. Similar considerations hold for other types of high molecular weight, water-soluble polymers.

Due to a much higher dispersed phase/continuous phase ratio used in a water-in-oil emulsion than the more conventional oil-in-water emulsion and the requirement for good invertibility, the stability of a water-in-oil emulsion containing unreacted monomer is often only marginal. In fact, under the influence of a high shear field, in particular at elevated temperatures, a monomer emulsion can break down quite readily, resulting in an unstable monomer emulsion. Polymerization of such an unstable monomer emulsion would inevitably lead to the formation of gels. Since the breaking down of a monomer emulsion by a shear field, which may result from a circulation pump, or a homogenizer, or a high speed of agitation, is more likely to occur at elevated temperatures, usually near or at the intended polymerization temperature, a stable monomer emulsion must be attained at this stage to prevent reactor fouling.

It has been discovered that the shear stability of a monomer water-in-oil emulsion is drastically enhanced once a small amount of polymer is formed in the emulsion. In fact, such a monomer emulsion becomes shear-resistant even at elevated temperatures. A stable monomer water-in-oil emulsion can be achieved by initiating the polymerization during the heat-up process using a first, very reactive initiator and once a small amount of polymer is present therein, a stable water-in-oil emulsion results. The polymerization is then completed by using a second, less reactive initiator at the desired reaction temperature.

The present invention therefore, in its broadest aspects, is an improved water-in-oil emulsion polymerization process for preparing a water-in-oil emulsion of a polymer which preferably is linear, of high molecular weight and is water-soluble. The improved process broadly comprises emulsifying one or more water-soluble monomers in an oil phase and polymerizing the monomer(s) therein using two distinct types of polymerization initiators; a first, highly reactive initiator which is capable of polymerizing such monomer(s) at a low temperature and a second, less reactive initiator which is capable of polymerizing the remaining monomer(s) at a higher temperature. The first, highly reactive initiator provides a small amount of polymer in the emulsion and the polymerization is then completed by the action of the second, less reactive initiator. The presence in the monomer emulsion of a small amount *in situ* — formed polymer provides a stable water-in-oil monomer emulsion that is no longer shear sensitive, thereby offering significant process advantages and providing a product polymer water-in-oil emulsion having improved properties.

The dual initiator polymerization process of the present invention offers a number of important advantages over water-in-oil emulsion polymerization processes taught in the prior art. When only a single polymerization initiator is employed, the polymerization may be troublesome because of the occurrence of any one of the following problems: If the initiator is very reactive, the rate of polymerization may become too fast to be controlled safely. Furthermore, under such reaction conditions, the risk of chain branching or even cross-linking is greatly increased which may lead to products of inferior performance characteristics, especially where linear polymers are preferred or necessary. On the other hand, if a moderately reactive initiator is employed, one runs the risk of fouling the reactor due to breaking down of the monomer emulsion as the result of shear degeneration at elevated temperatures.

For entirely different purposes, polymerizations using two catalysts are described in the prior art. For example, US—A—3,284,393 discloses a water-in-oil emulsion polymerization process including the use of a mixture of benzoyl and lauroyl peroxides for achieving polymers of higher solution viscosities. US—A—3,414,547 describes a method of reducing unreacted monomer in the finished product by adding a second initiator after at least one half of the exotherm has occurred.

The process of the present invention is useful for the polymerization of any monomer(s) which may be

polymerized by water-in-oil emulsion polymerization since all water-in-oil emulsions of such monomers are shear-sensitive. For example, water-in-oil emulsion polymerization may be employed to homopolymerize and interpolymerize one or more of the following monomers: acrylic and methacrylic acid; acrylic and methacrylic acid salts of the formula

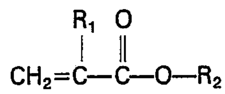

wherein $R_1$ is a hydrogen atom or a methyl group; and $R_2$ is a hydrogen atom, an alkali metal atom (e.g., sodium, potassium), an ammonium group, an organoammonium group of the formula $(R_3)(R_4)(R_5)\ NH^+$ where $R_3$, $R_4$ and $R_5$ are each a hydrogen atom, an alkyl group having from 1 to 3 carbon atoms, or a hydroxyalkyl group having from 1 to 3 carbon atoms, such as triethanolamine; acrylamide and methacrylamide and derivatives thereof of the formula

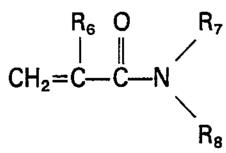

wherein $R_6$ is a hydrogen atom or a methyl group; $R_7$ is a hydrogen atom, a methyl group or an ethyl group; $R_8$ is a hydrogen atom, a methyl group, an ethyl group or $—R_9—SO_3X$, wherein $R_9$ is a divalent hydrocarbon group (e.g., alkylene, phenylene, cycloalkylene) having from 1 to 13 carbon atoms, preferably an alkylene group having from 2 to 8 carbon atoms, a cycloalkylene group having from 6 to 8 carbon atoms, or phenylene, most preferably

$—C(CH_3)_2—CH_2—$, $—CH_2CH_2—$, 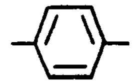 $—CH(CH_3)—CH_2—$,

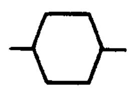 and 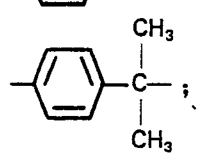 ;

and X is a monovalent cation such as a hydrogen atom, an alkali metal atom (e.g., sodium, potassium), or an ammonium group; vinyl sulfonates such as sodium vinyl sulfonate; and olefinic dicarboxylic acids such as maleic acid.

Specific examples of water-soluble monomers which may be homopolymerized or interpolymerized by the process of the present invention are acrylic and methacrylic acid; salts thereof such as sodium acrylate and ammonium acrylate; acrylamide and methacrylamide; aminoalkyl- and dialkylaminoalkyl-acrylates and -methacrylates such as dimethylaminoethyl methacrylate; acrylamido- and methacrylamido-sulfonic acids and sulfonates such as 2-acrylamido-2-methylpropanesulfonic acid (available from the Lubrizol Corporation under its tradename, and hereinafter referred to as, "AMPS"), sodium "AMPS", ammonium "AMPS", organoammonium "AMPS". These water-soluble monomers may be interpolymerized with a minor amount (i.e., less than 20 mole%, preferably less than 10 mole%) of one or more hydrophobic vinyl monomers to impart certain desirable properties to the resulting polymer; i.e. vinyl monomers of the formula

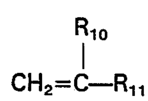

wherein $R_{10}$ is a hydrogen atom or a methyl group and $R_{11}$ is

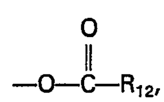

a halogen atom (e.g., chlorine), $—O—R_{13}$ or

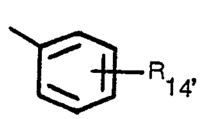

wherein $R_{12}$ is an alkyl group having from 1 to 8 carbon atoms, $R_{13}$ is an alkyl group having from 1 to 6 carbon atoms, preferably 2—4 carbon atoms, and $R_{14}$ is a hydrogen atom, a methyl group, an ethyl group, or a halogen atom (e.g., chlorine), preferably a hydrogen atom or a methyl group. Specific examples of suitable copolymerizable hydrophobic vinyl monomers are alkyl esters of acrylic and methacrylic acids such as methyl acrylate, methyl methacrylate, ethyl acrylate, ethyl methacrylate, butyl acrylate, isobutyl acrylate, dodecyl acrylate, 2-ethylhexyl acrylate; vinyl esters such as vinyl acetate, vinyl propionate, vinyl butyrate; vinylbenzenes such as styrene, alpha-methyl styrene, vinyl toluene; vinyl ethers such as propyl vinyl ether, butyl vinyl ether, isobutyl vinyl ether, methyl vinyl ether and ethyl vinyl ether; and vinyl halides such as vinyl chloride, vinylidene chloride.

The preferred water-soluble monomers are acrylamide, "AMPS" and sodium "AMPS", sodium acrylate, and ammonium acrylate. The preferred hydrophobic monomers are vinyl acetate, ethyl acrylate, styrene and methyl methacrylate.

As stated above, the process of this invention may be used to prepare homopolymers or interpolymers of monomers which may be polymerized by water-in-oil emulsion polymerization, such as the monomers exemplified above. By "interpolymers" is meant copolymers of two of such monomers, terpolymers of three of such monomers, tetrapolymers of four of such monomers, and higher polymers if desired. The number of different monomers employed in the polymerization process is not critical and may be varied depending upon the particular polymer desired. The process of the present invention is especially useful for the preparation of anionic, linear, high molecular weight polymers useful as flocculants in treating, for example waste mineral processing streams, and therefore the process will be described in detail below with respect to such polymers merely as a matter of convenience. It is to be expressly understood that the process of the present invention is not limited to preparing only such types of polymers; rather, it is the intention that any monomer capable of polymerization by water-in-oil emulsion polymerization may be polymerized by the process of this invention.

Broadly, the process of the present invention comprises the steps of forming a water-in-oil emulsion of at least one monomer (normally, a water-soluble monomer) from the combination of an aqueous phase comprising an aqueous solution containing at least one such monomer and an oil phase comprising a mixture of a hydrophobic liquid and an oil-soluble surfactant. If it is desired to include a hydrophobic monomer into the polymer being polymerized, one or more hydrophobic monomers may be incorporated into the oil phase, the mixture of the hydrophobic liquid and oil-soluble surfactant.

The combined aqueous and oil phases may be homogenized to form a water-in-oil emulsion containing the water-soluble monomer(s), the hydrophobic liquid, any hydrophobic monomer(s), water and the oil-soluble surfactant. The resulting monomer water-in-oil emulsion is preferably deoxygenated and thereafter the monomers are polymerized. The polymerization may be initiated by adding a first, highly reactive free radical type of initiator, capable of polymerizing the monomers at low temperature, to the monomer water-in-oil emulsion and heating the resulting emulsion/initiator combination to a low temperature sufficient to initiate polymerization of the monomers. Once, or before, a small amount of polymer is formed therein, a second, less reactive free radical polymerization initiator, capable of polymerizing the monomers at a higher temperature, may be added to the reaction system and the polymerization may then be continued and completed to form a water-in-oil emulsion of the resulting polymer. The polymer water-in-oil emulsion may be recovered and the polymer itself may be recovered should that be desirable. Alternatively, an inverting surfactant may be added to the polymer water-in-oil emulsion to invert the emulsion on contact with water.

In the first step of the process, an aqueous phase which comprises an aqueous solution containing at least one water-soluble monomer is prepared. The number of monomers contained in the aqueous solution is not critical and any combination of any water-soluble monomer having a water-solubility of at least 50 weight percent may be employed. The aqueous solution may be prepared by conventional techniques and may contain the monomers in any concentration, for example, from 10 to 75 weight percent, based upon the weight of the aqueous solution. If the water-soluble monomers include acids, for example, acrylic acid or "AMPS", it may be convenient to first react the acid with a suitable base, preferably with an equivalent amount of base, such as sodium hydroxide, to provide, e.g., a sodium salt solution having a pH from 5 to 11, preferably from 6 to 10, depending upon the type and amount of base employed. The preferred base is sodium hydroxide. Any additional water-soluble monomers may then be added to the resulting salt solution to provide the aqueous solution to be combined with the hydrophobic liquid-containing mixture.

The oil phase, to be combined with the foregoing aqueous phase, generally comprises a mixture of a hydrophobic liquid and an oil-soluble surfactant and, optionally, one or more hydrophobic monomers.

The particular hydrophobic liquid is not critical. Examples of suitable hydrophobic liquids for use herein include benzene, xylene, toluene, mineral oils, kerosenes, petroleum, and mixtures thereof. A preferred hydrophobic liquid is an aliphatic hydrocarbon available from the Exxon Chemical Co. under its tradename Isopar M.

The hydrophobic monomer(s) which may be added to the oil phase may be any hydrophobic monomer which has a solubility in water of less than 10 weight percent and includes, for example, one or more of vinyl esters such as vinyl acetate, vinyl propionate and vinyl butyrate; alkyl acrylates such as ethyl acrylate, butyl acrylate, isobutyl acrylate, dodecyl acrylate, and 2-ethylhexyl acrylate; alkyl methacrylates such as

methyl methacrylate; vinyl ethers such as methyl vinyl ether, ethyl vinyl ether, butyl vinyl ether, propyl vinyl ether, and isobutyl vinyl ether; acrylonitrile; styrene and its derivatives, such as alpha-methylstyrene; vinyl halides such as vinyl chloride, and vinylidene chloride; and N-vinyl carbazole.

The particular oil-soluble surfactant is not critical. Examples of suitable oil-soluble surfactants for use in the oil phase are those of the oil-soluble type having a Hydrophile-Lipophile Balance (HLB) value of from 1 to 10, preferably from 2 to 6. These surfactants may be referred to as the water-in-oil type. The suitable surfactants include fatty acid esters, such as sorbitan monolaurate, sorbitan monostearate, sorbitan monooleate (such as that available from I.C.I. under its tradename Span 80), and sorbitan trioleate; mono- and diglycerides, such as mono- and diglycerides obtained from the glycerolysis of edible fats; polyoxyethylenated fatty acid esters, such as polyoxyethylenated (4) sorbitan monostearate; polyoxyethylenated linear alcohols, such as Tergitol 15-S-3 and Tergitol 25-L-3 (both supplied by Union Carbide Corp.); polyoxyethylene sorbitol esters, such as polyoxyethylene sorbitol beeswax derivative; and polyoxyethylenated alcohols such as polyoxyethylenated (2) cetyl ether.

The oil phase may contain any convenient amount of hydrophobic monomer, depending upon the particular monomer and the desired content of such monomers in the final polymer product. Similarly, the amount of oil-soluble surfactant in the oil phase is not critical and generally is that amount sufficient to form the resulting monomer water-in-oil emulsion when the oil phase is blended with the foregoing aqueous phase. However, generally speaking, the oil phase contains from 1 to 10 weight percent of the surfactant, based on the total weight of the oil phase. The amount of hydrophobic liquid in the oil phase is generally of the order of from 70 to 99 weight percent, based on the total weight of the oil phase.

The oil phase is then blended or combined with the foregoing aqueous phase and the resulting mixture may be homogenized to form a water-in-oil emulsion containing the monomer(s) to be polymerized. Homogenization takes place by subjecting the mixture to high shear mixing techniques and using equipment which are generally well-known in the art. These include the use of homogenizers, high speed mixers and any other techniques for obtaining high shear mixing. The homogenization generally is carried out at a temperature of from 10 to 30°C, preferably from 15 to 25°C. The homogenization may be carried out either continuously or in a batch process.

The water-in-oil emulsions so prepared normally have a rather narrow particle size distribution. The diameters of the majority of the particles may range from 0.2 to 5 μm.

The resulting monomer water-in-oil emulsion generally comprises:

(a) an aqueous phase constituting from 50 to 80, preferably from 60 to 78, weight percent of the total emulsion and containing the water-soluble monomer(s) wherein the monomers constitute from 20 to 80, preferably from 25 to 50, weight percent of the total aqueous phase;

(b) an oil phase constituting from 15 to 45, preferably from 20 to 40, weight percent of the total emulsion and containing a hydrophobic liquid and, optionally, from 0.1 to 20, preferably from 1 to 10, weight percent, based on the weight of the oil phase, of one or more hydrophobic monomers; and

(c) an oil-soluble surfactant constituting from 0.1 to 5, preferably from 1 to 3, weight percent of the total emulsion.

After forming the monomer water-in-oil emulsion, either during or after addition to a reactor, it is generally deoxygenated, by for example, subjecting part or all of the emulsion to a vacuum of from 6,665 to 66,650 Pa (50 to 500 mm of mercury), preferably from 13,330 to 26,660 Pa (100 to 200, mm of mercury) under an inert gas atmosphere at a temperature of from 0 to 30°C, either continuously or as a batch process.

A first, highly reactive initiator useful in polymerizing ethylenically unsaturated monomers is then added to the reactor. Any free radical initiator which is capable of initiating the polymerization at a temperature less than 45°C (e.g. 0—45°C), preferably between 20 and 40°C, can be used as the first initiator. Examples of such initiators are shown below in Table I:

TABLE I

| Initiator | $t_{1/2}$ (T°C) |
|---|---|
| 2,2′-azobis-(2-cyclopropylpropionitrile) | 5.5 (44.2) |
| 2,2′-azobis-(2,4-dimethyl-4-methoxyvaleronitrile) | 10 (33) |
| 2,2′-azobis-(1-cyclooctanenitrile) | 3.6 (36.6) |
| 1,1′-azobis-3-chlorocumene | 7.8 (42.8) |
| 1,1′-azobis-4-chlorocumene | 17 (36) |
| 2,2′-azobis-2-(4-tolyl)propane | 11.8 (42.8) |
| phenyl-azo-triphenylmethane | 3.4 (43.3) |

TABLE I (cont'd.)

| Initiator | $t_{1/2}$ (T°C)* |
|---|---|
| 1,1'-azo-bis-1-(4-tolyl)cyclohexane | 9.5 (43.8) |
| 3-tolyl-azo-triphenylmethane | 2.6 (42.8) |
| isobutyryl peroxide | 0.8 (40) |
| alpha-chloropropionyl-m-chlorobenzoyl peroxide | 12.7 (41) |
| cyclopropane acetyl peroxide | 0.19 (25) |
| benzoyl isobutyryl peroxide | 0.47 (41) |
| m-chlorobenzoyl isobutyl peroxide | 5.5 (40) |
| p-nitrobenzoyl isobutyryl peroxide | 2.4 (40) |
| cyclopentane formyl peroxide | 12.8 (40) |
| cyclohexane formyl peroxide | 1.3 (35) |
| 2-iodobenzoyl-4-nitrobenzoyl peroxide | 3.4 (25) |
| 2-nitrobenzoyl peroxide | 10.8 (25) |
| benzoyl phenylacetyl peroxide | 0.9 (25) |
| phenyl acetyl peroxide | 0.4 (20) |
| benzoyl-2-[trans-2-(phenyl)vinyl]benzoyl peroxide | 2 (35) |
| cis-4-tert-butylcyclohexane formyl peroxide | 11.4 (40) |
| t-butyl-hydroperoxide/cobalt 2-ethyl hexanoate | 0.18 (25) |
| t-butyl-hydroperoxide/cobalt stearate | 0.14 (45) |
| dimethyl peroxalate | 11.3 (25) |
| di-isopropyl peroxalate | 3.2 (35) |
| di-(tert-butylperoxy)oxalate | 2.8 (35) |
| di-tert-butyl-peroxalate | 1.9 (38) |
| tert-butyl-2-(methylthio)perbenzoate | 7.4 (39) |
| tert-butyl-2-(phenylthio)perbenzoate | 1.6 (40) |
| tert-butyl-triphenyl peracetate | 0.25 (35) |
| p-toluenesulfonyl-p-tolylsulfone | 1.3 (39) |

* $t_{1/2}$ = half-life of initiator, in hours, at the indicated temperature.

The first initiator may be added to the reactor either directly or in the form of a solution, i.e., the initiator is dissolved in a suitable solvent, such as a hydrocarbon liquid, e.g., toluene. The initiator solution typically contains the initiator in an amount of from 0.1 to 10, preferably from 0.5 to 5, weight percent. Preferably, all of the first initiator is initially added to the reactor containing the monomer water-in-oil emulsion.

The polymerization is then initiated by heating to a temperature of from 30 to 60°C, preferably from 40 to 50°C until a small amount of polymer is formed therein and a shear-stable emulsion is obtained. The

specific amount of polymer formed is not critical, as long as a shear-stable emulsion is obtained, and will depend upon, e.g., the specific first initiator employed, the reactivity of the monomers being polymerized, the temperature of polymerization, and the time during which the monomer water-in-oil emulsion is subjected to heating in the presence of the first initiator. Generally speaking, it is desirable and it is therefore preferred that this initial polymerization be conducted at a temperature and for a period of time necessary to obtain a shear-stable emulsion, so that the polymerization can be completed using the second, less reactive initiator at higher temperatures. The amount of polymer necessary to obtain a shear-stable emulsion will necessarily depend upon, e.g., the monomers being polymerised, the molecular weight of the resulting polymer, the temperature of polymerization, and the amount of shear which the emulsion experiences during polymerization. Those skilled in the art should be capable of determining the necessary amount of polymer to be formed for a given system to provide a shear-stable emulsion. As a general guideline to assist those skilled in the art to more easily practice the present invention, for a monomer water-in-oil emulsion system which contains 50 to 60 mole percent acrylamide monomer, 1 to 10 mole percent vinyl acetate monomer and 30 to 49 mole percent sodium acrylate monomer, all based upon the total monomers, this initial polymerization is conducted under necessary conditions to obtain from 1 to 5 percent, based on the total emulsion, of polymer therein. This level of polymer for this particular combination of monomers produces a shear-stable emulsion. The amount of polymer may be determined using suitable conventional techniques, such as a coagulation test.

The initial polymerization is generally and preferably performed at atmospheric pressure, although sub-atmospheric or super-atmospheric pressures may be used. In addition, the initial polymerization is also preferably carried out under an inert atmosphere, such as a helium, argon or nitrogen atmosphere.

Generally, the second initiator may be any free radical initiator capable of initiating polymerization of ethylenically-unsaturated monomers at a temperature greater than 40°C, desirably between 40 and 100°C, preferably between 45 and 80°C. Examples of such initiators are shown in Table II below.

TABLE II

| Initiator | $t_{1/2}$ (T°C)* |
|---|---|
| 2,2′-azobis-(2,4-dimethylvaleronitrile) | 10 (52) |
| 2,2′-azobis-(isobutyronitrile) | 10 (64) |
| 2,2′-azobis-2,4,4-trimethylvaleronitrile | 16 (40) |
| 2,2′-azobis-2-methylbutyronitrile | 8.4 (69.8) |
| 2,2′-azobis-2-ethylpropionitrile | 2.3 (80) |
| 1,1′-azobis-1-cyclopentane nitrile | 2.6 (80) |
| 2,2′-azobis-2,3-dimethylbutyronitrile | 7.4 (69.8) |
| 2,2′-azobis-2-methylvaleronitrile | 4.6 (69.8) |
| 2,2′-azobis-2-cyclobutylpropionitrile | 1.3 (80.5) |
| 1,1′-azobis-1-cyclohexanenitrile | 23 (80) |
| 2,2′-azobis-2-propyl-butyronitrile | 0.75 (80) |
| 2,2′-azobis-2,3,3-trimethylbutyronitrile | 2.6 (80) |
| 2,2′-azobis-2-methylhexylonitrile | 1.2 (80) |
| 2,2′-azobis-2-isopropylbutyronitrile | 1.9 (80.5) |
| 1,1′-azobis-1-cycloheptanenitrile | 2.0 (59) |
| 1,1′-azobis-1-(2-methylcyclohexane)-nitrile | 26 (80) |
| 1,1′-azobis-1-cyclohexanecarbonitrile | 41 (80) |
| 2,2′-azobis-2-isopropyl-3-methylbutyronitrile | 1.5 (80.5) |

TABLE II (cont'd.)

| Initiator | $t_{1/2}$ (T°C)* |
|---|---|
| 2,2'-azobis-2-benzylpropionitrile | 1.7 (80) |
| 2,2'-azobis-2-(4-chlorobenzyl)propionitrile | 2.2 (80) |
| 2,2'-azobis-2-(4-nitrobenzyl)propionitrile | 1.9 (80) |
| 1,1'-azobis-1-cyclodecanenitrile | 3.6 (51) |
| azo-bis-isobutyramidine | 27 (60) |
| 2,2'-azobis-methyl-2-methylpropionate | 1.2 (80) |
| azobis-(N,N'-dimethyleneisobutyramidine) | 17.6 (60) |
| azobis-(1-carbomethoxy-3-methylpropane) | 42 (55) |
| 2,2'-azobis-(ethyl-2-methylpropionate) | 4.6 (70) |
| 1,1'-azobis-1-chloro-1-phenylethane | 0.22 (75) |
| 1,1'-azobis-1-chloro-1-(4-bromophenyl)ethane | 1.1 (59) |
| 3,7'-diphenyl-1,2-diaza-1-cycloheptene | 5.1 (61) |
| 1,1'-azo-bis-cumene | 1 (59) |
| 3-bromophenyl-azo-triphenylmethane | 1.7 (54) |
| 2,4-dinitrophenyl-azo-9-phenylfluorene | 0.9 (56) |
| 1-hydroxybutyl-n-butyl peroxide | 11 (79) |
| acetyl peroxide | 61 (55) |
| propionyl peroxide | 10 (65) |
| 2-iodopropionyl peroxide | 0.9 (56) |
| butyryl peroxide | 8.6 (65) |
| beta-allyloxypropionyl peroxide | 9.6 (70) |
| benzoyl peroxide | 14 (70) |
| 2-chlorobenzyl peroxide | 6.1 (80) |
| 2,4-dichlorobenzoyl peroxide | 18 (50) |
| cyclohexane acetyl peroxide | 15 (65) |
| decanoyl peroxide | 12 (60) |
| 4-benzylidenebutyryl peroxide | 8 (50) |
| lauroyl peroxide | 6.7 (70) |
| ethyl-tert-butyl peroxalate | 4.3 (45) |
| tert-butyl perpivalate | 1.5 (70) |
| tert-butyl phenylperacetate | 6.4 (78) |
| potassium persulfate | 61 (60) |

* $t_{1/2}$ = half-life of initiator, in hours, at the indicated temperature

The second, less reactive initiator is an initiator which polymerizes ethylenically-unsaturated monomers at a temperature higher than the temperature at which the first, highly reactive initiator polymerizes such monomers; preferably these temperatures differ by at least 5°C; most preferably, the first, highly reactive initiator reaches a given $t_{1/2}$ (as defined above), in hours, at a temperature which is 20°C less than the temperature at which the second, less reactive initiator reaches that same $t_{1/2}$.

The polymerization reaction generates considerable heat which must be removed. For example, when one of the monomers being polymerized is acrylamide, due to the very fast rate of its polymerization (about $8 \times 10^{-3}$ moles/liter.second at 50°C) and its high heat of polymerization (about −84 KJ/mole (−20 Kcal/mole)), an enormous amount of heat is realized during the polymerization which must be dissipated properly to avoid the occurrence of a runaway exotherm. The heat-removing capability of a conventional reactor equipped with either a cooling jacket or cooling coils, or both, may be inadequate for the purpose of controlling this polymerization. Consequently, the rate of heat evolution; i.e., the rate of polymerization, must be significantly reduced to accommodate the limited cooling capacity which may result in long batch times.

A more effective method for heat removal is the use of an external heat exchanger connected to the reactor through a closed loop. The reaction mixture may be circulated through the heat exchanger by a pump during the course of polymerization. Due to the fact that the process of the present invention provides a shear-stable water-in-oil emulsion, such an external heat exchanger may be employed in the present invention. Under ordinary conditions, without the improvement afforded by the present invention, under the shear field generated by a high flow capacity pump, the stability of a conventional monomer emulsion is so marginal that such an operation cannot be carried out with any reasonable degree of reliability. In fact, emulsion breakdown often takes place at the early stages of polymerization leading to the formation of either coarse emulsion particles or gelation. Any conventional heat apparatus may be used to provide the external heat exchange loop which may be used in the present invention. It is preferred to employ such an external heat exchanger in the process of the present invention so as to afford the maximum removal or dissipation of the heat generated during polymerization. The advantages of the present invention should be obtained, however, regardless of the mechanical design of the reactor system employed.

The polymerization reaction rate may be controlled by the introduction of small quantities of air (atmospheric air and/or oxygen) into the reaction. The air may be introduced, i.e., sparged, either intermittently or continuously into the reactor to control the reaction temperature. When a continuous air sparging is employed, the amount of oxygen in the reaction medium must be carefully controlled so as to achieve the desired rate of polymerization. An oxygen content of from 1.0, preferably from 0.02 to 0.50, parts per million is desirable. When the air is introduced intermittently, a flow rate of from 0.006 to 0.6 $cm^3s^{-1}$ $kg^{-1}$ (from 0.01 to 1.0, cubic inches per minute per pound of reactor charge) preferably from 0.03 to 0.3 $cm^3s^{-1}$ $kg^{-1}$ (from 0.05 to 0.5 cubic inches per minute per pound of reactor charge) is desirable. The duration of air injection may vary from a fraction of a second to a few seconds, and it may be repeated as many times as necessary until a desired rate of polymerization is achieved.

After the polymerization is complete, an antioxidant may be added to the reaction mass. Any organic antioxidant suitable for the inhibition of free radical reactions may be used. The antioxidant is generally first dissolved in a suitable solvent. The preferred antioxidants include substituted phenols (such as that available from Shell under its tradename Ionol), thiobisphenol (such as that available from Monsanto under its tradename Santonox-R), and hydroquinone derivatives, such as the monomethyl ether of hydroquinone. The suitable solvents include toluene, benzene, xylene, diethyl ether and methyl acetate.

The antioxidant may be present in the antioxidant solution in amounts of from 0.1 to 10, preferably from 1 to 5 weight percent.

The antioxidant solution is added to the reaction mass in amounts of from 0.05 to 5 parts per hundred parts of polymer. Addition of the antioxidant may be commenced either at the end of the polymerization or after the reaction mixture has been cooled to ambient temperature.

The reaction mass is generally cooled to about 25°C and the polymer water-in-oil emulsion recovered.

The resulting polymer water-in-oil emulsion generally comprises:

(a) an aqueous phase comprising from about 50 to 80, preferably from 60 to 78, weight percent of the total emulsion and containing therein from 20 to 80, preferably from 25 to 60, weight percent of polymer, based on the total weight of aqueous phase;

(b) a hydrophobic liquid constituting from 15 to 50, preferably from 20 to 40, weight percent of the total emulsion.

(c) an oil-soluble surfactant constituting from 0.1 to 5, preferably from 1 to 3, weight percent of the total emulsion.

After the polymer water-in-oil emulsion is prepared, a water-soluble inverting surfactant may be added thereto. The surfactants which may be used include polyoxyethylene alkyl phenol; polyoxyethylene (10 mole) cetyl ether; polyoxyethylene alkyl-aryl ether; quaternary ammonium derivatives; potassium oleate; N-cetyl-N-ethyl morpholinium ethosulfate; sodium lauryl sulfate; condensation products of higher fatty alcohols with ethylene oxide, such as the reaction product of oleyl alcohol with 10 ethylene oxide units; condensation products of alkylphenols and ethylene oxide, such as the reaction products of isooctylphenol with 12 ethylene oxide units; condensation products of higher fatty acid amines with five, or

more, ethylene oxide units; ethylene oxide condensation products of polyhydric alcohol partial higher fatty esters, and their inner anhydrides (e.g., mannitol anhydride, called Mannitan, and sorbitol-anhydride, called Sorbitan). The preferred surfactants are ethoxylated nonyl phenols and ethoxylated nonyl phenol formaldehyde resins.

The inverting surfactant may be used in amounts of from 0.1 to 20, preferably from 1 to 10, parts by weight per one hundred parts by weight of the polymer.

The water-in-oil emulsion containing the inverting surfactant is inverted in the presence of water releasing the polymer into the water in a very short period of time.

The solubilized polymer may then be used, for example, as a flocculant in treating mineral processing streams such as phosphate slimes or coal blackwater suspensions. For use as a flocculant, the water solution may contain from 0.001 to 0.3, preferably from 0.01 to 0.1, weight percent polymer.

The polymers prepared by the process of the present invention may be, for example, those described in US—A—4,529,782. The polymers disclosed therein are preferably of the following general formula:

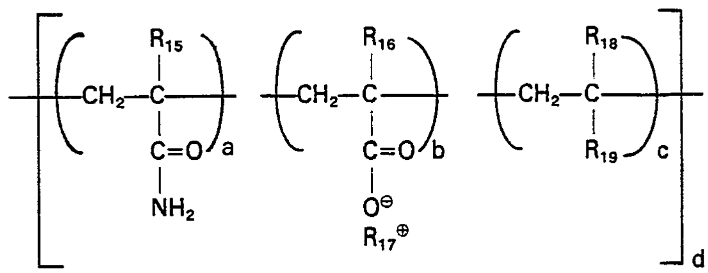

wherein $R_{15}$, $R_{16}$ and $R_{18}$ are independently hydrogen or methyl; $R_{17}^{+}$ is an alkali metal ion, such as $Na^{+}$ or $K^{+}$; $R_{19}$ is $—OR_{20}$ (where $R_{20}$ is an alkyl group having up to 5 carbon atoms),

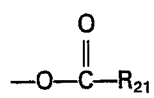

(where $R_{21}$ is either methyl or ethyl),

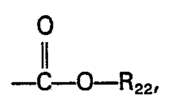

(where $R_{22}$ is an alkyl group having up to 8 carbon atoms), phenyl, methyl-substituted phenyl, CN, or

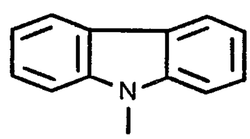 ;

wherein a is from 5 to 90 mole percent, preferably from 30 to 60 mole percent, b is from 5 to 90, preferably from 30 to 60 mole percent, c is from 0.2 to 20 mole percent, preferably from 1 to 10 mole percent, with the proviso that a + b + c equals 100 mole percent, and d is an integer of from 100,000 to 500,000. Under certain conditions, the alkoxy or acyloxy groups in the polymer may be partially hydrolyzed to the corresponding alcohol group and yield a tetrapolymer of the following general formula:

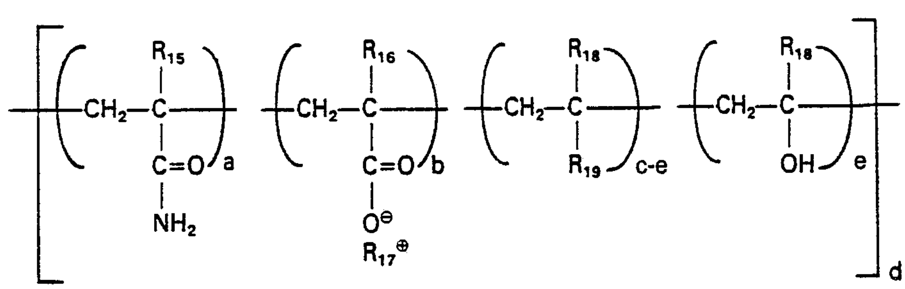

wherein $R_{15}$, $R_{16}$, $R_{17}^{+}$, $R_{18}$, $R_{19}$, a, b, c and d are as previously defined and e is from 0.1 to less than 20 mole percent and wherein a + b + (c − e) + e = 100 mole%.

The most preferred polymers disclosed in US—A—4,529,782 are terpolymers of the following formula:

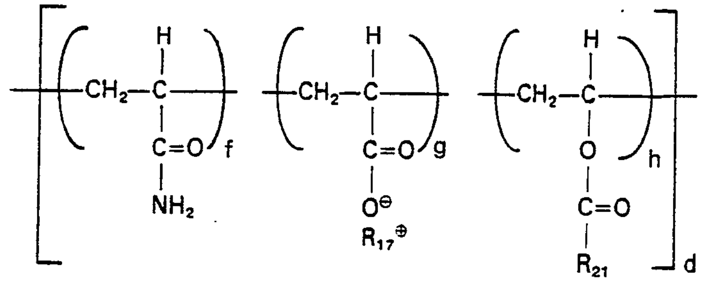

wherein $R^+_{17}$ is $Na^+$ or $K^+$, $R_{21}$ is methyl, ethyl or butyl, and f is from 5 to 90, preferably from 30 to 60 mole percent, g is from 5 to 90, preferably from 30 to 60 mole percent, h is from 0.2 to 20 mole percent, with the proviso that f + g + h equals 100 mole percent and d is as previously defined.

The most preferred tetrapolymers disclosed in said US—A—4,529,782 are of the following formula:

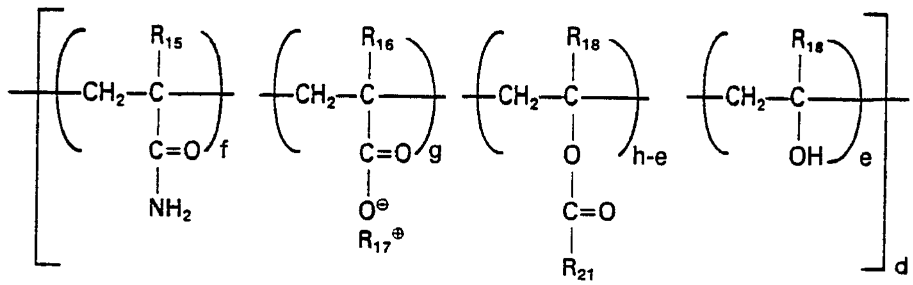

wherein $R_{15}$, $R_{16}$, $R^+_{17}$, $R_{18}$, $R_{21}$, f, g, h, d and e are as previously defined.

However, for purposes of the present invention, the most preferred polymers are those disclosed in GB—A—2,136,440 and represented by the following formula:

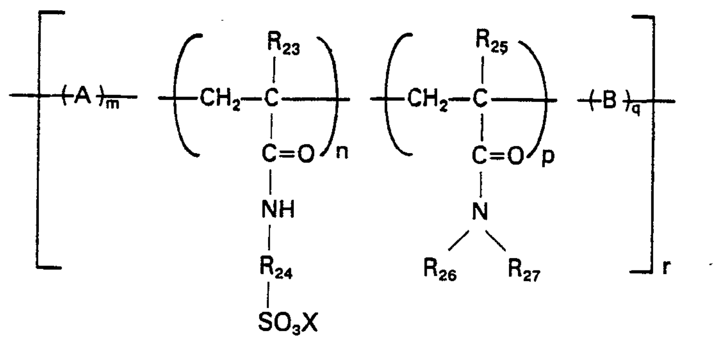

wherein A represents a repeating unit derived from a hydrophobic vinyl monomer having a water-solubility of less than 5 weight%; $R_{23}$ and $R_{25}$ are each a hydrogen atom or a methyl group; $R_{26}$ and $R_{27}$ are each a hydrogen atom, a methyl group or an ethyl group; $R_{24}$ represents a divalent hydrocarbon group having from 2 to 13 carbon atoms; X represents a monovalent cation; B represents a repeating unit derived from an ethylenically-unsaturated carboxylic acid or a salt thereof; m is from 0.1—10 mole%, n is from 1—40 mole%, p is from 20—98.9 mole%, and q is 0—40 mole%, with the proviso that m + n + p + q = 100 mole%; and r is a large positive integer (e.g., such that the polymer molecular weight is greater than 500,000, preferably greater than 1,000,000).

Among these polymers are terpolymers represented by the following formula:

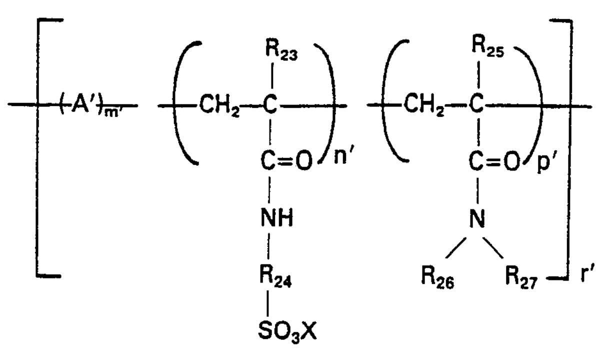

wherein

(1) A′ represents a repeating unit derived from a hydrophobic vinyl monomer having a water-solubility of less than 5 weight percent such as monomeric repeating units represented by the formula

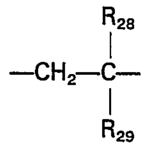

wherein $R_{28}$ is —H or —$CH_3$; $R_{29}$ is

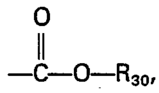 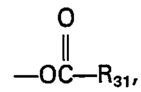

a halogen atom (e.g., chlorine), —O—$R_{32}$, —CN or

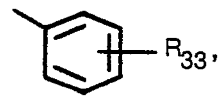

wherein $R_{30}$ is an alkyl group having from 1 to 12 carbon atoms, preferably from 1 to 4 carbon atoms, most preferably a butyl group, $R_{31}$ is an alkyl group having from 1 to 4 carbon atoms, preferably a methyl group; $R_{32}$ is an alkyl group having from 1 to 6 carbon atoms, preferably 2 to 4 carbon atoms; and $R_{33}$ is a hydrogen atom, a methyl group or an ethyl group, preferably a hydrogen atom or a methyl group. Examples of preferred hydrophobic vinyl monomers include vinyl acetate, styrene, acrylonitrile, alpha-methyl styrene, ethyl acrylate, methyl acrylate, ethyl methacrylate, methyl methacrylate, butyl acrylate, isobutyl acrylate, dodecyl acrylate, 2-ethylhexylacrylate, vinyl propionate, vinyl butyrate, propyl vinyl ether, butyl vinyl ether, isobutyl vinyl ether, vinyl chloride and vinylidene chloride.

(2) $R_{23}$ and $R_{25}$ are each a hydrogen atom or a methyl group although it is preferred that both be a hydrogen atom;

(3) $R_{24}$ is a divalent hydrocarbon group having from 2 to 13 carbon atoms, such as alkylene groups having from 2 to 8 carbon atoms, cycloalkylene groups having from 6 to 8 carbon atoms or phenylene. Preferred divalent hydrocarbon groups include

$—C(CH_3)_2—CH_2—$, 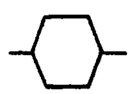 $—CH_2CH_2—$, $—CH_2CH_2CH_2—$, $—CH_2CH_2CH_2CH_2—$,

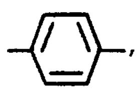, $—CH(CH_3)—CH_2—$, and 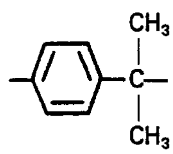

The most preferred $R_{24}$ grouping is $—C(CH_3)_2—CH_2—$ which forms sodium "AMPS" when $R_{23}$ = hydrogen and X is sodium;

(4) X is a monovalent cation such as a hydrogen atom, an ammonium group, an organoammonium group or an alkali metal atom (e.g., Na or K). The most preferred cation is a sodium atom;

(5) $R_{26}$ and $R_{27}$ are each a hydrogen atom, a methyl group or an ethyl group although it is preferred that both be hydrogen atoms;

(6) m′ is from 0.1—10 mole%, preferably from 0.2—5 mole%;

(7) n′ is from 1—40 mole%, preferably from 5—20 mole%;

(8) p′ is from 50—98.9 mole%, preferably from 75—95 mole%;

(9) m′ + n′ + p′ = 100 mole%; and

(10) r′ is a large positive integer to provide a polymer molecular weight of greater than 500,000 and preferably greater than 1,000,000.

Some of the acetoxy or alkoxy groups of $R_{29}$ (i.e., the

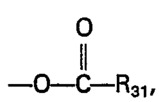

or —O—$R_{32}$ groups, respectively) may be hydrolyzed, resulting in a tetrapolymer which may be represented by the formula:

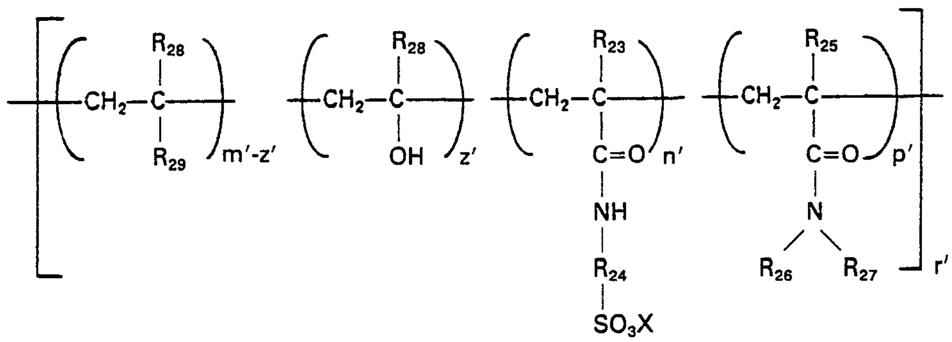

wherein $R_{23}$, $R_{24}$, $R_{25}$, $R_{26}$, $R_{27}$, $R_{28}$, $R_{29}$, X, m', n', p' and r' are as defined above, and z' is from 0.1 to less than 10 mole% and wherein $(m' - z') + z' + n' + p' = 100$ mole%.

Alternatively, instead of defining the terpolymer repeating units as in (6)—(8) above, the terpolymer and its hydrolyzed derivative may be defined as that resulting from the polymerization of a water-in-oil monomer emulsion containing from 0.1—20 mole%, preferably 0.2—10 mole% of monomer A', from 1—40 mole%, preferably from 5—20 mole%, of the $SO_3X$-containing monomer, and from 50—98.9 mole%, preferably from 75—95 mole%, of monomer

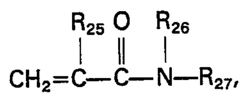

all based on the total moles of monomer in the emulsion.

The most preferred terpolymer is that resulting from the polymerization of a water-in-oil monomer emulsion containing from 8—12 mole% of sodium "AMPS" monomer, from 87—91 mole% of acrylamide monomer, and from 1—5 mole% of vinyl acetate monomer. These terpolymers are especially useful in flocculating phosphate slimes.

Also among the polymers disclosed in the above-identified application filed on even date herewith are tetrapolymers of the following formula:

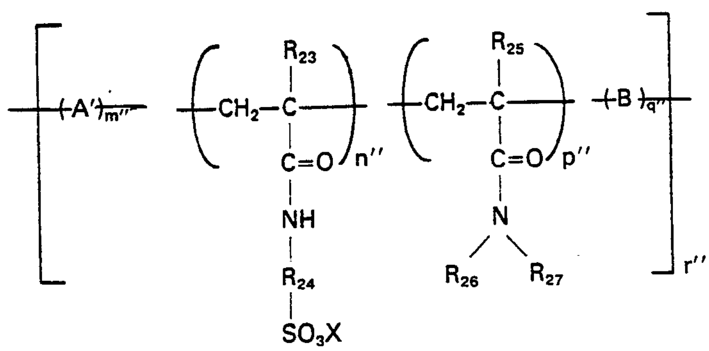

wherein A', $R_{23}$, $R_{24}$, $R_{25}$, $R_{26}$ and $R_{27}$ have the same meaning as above; wherein m'', n'', and r'' have the same meaning as m', n', and r', respectively, defined above; and wherein

(1) p'' is from 20—96.9 mole%, preferably from 40—86.9 mole%;

(2) q'' is greater than 0 and up to 40 mole%, preferably from 10—30 mole%;

(3) B represents a repeating unit derived from an ethylenically-unsaturated monomer containing a carboxylic acid group such as acrylic acid, methacrylic acid or maleic acid and salts thereof with alkali metals (e.g., sodium or potassium), ammonia (i.e., ammonium salts) and organic amines (e.g., ammonium salts represented by the formula $(R_{34})(R_{35})(R_{36})NH^+$ wherein $R_{34}$, $R_{35}$ and $R_{36}$ are each a hydrogen atom, an alkyl group having from 1 to 3 carbon atoms, or a hydroxyalkyl group having from 1 to 3 carbon atoms, such as a trimethylammonium group or a triethanolammonium group). The preferred B monomer is sodium acrylate.

Some of the acetoxy or alkoxy groups of the hydrophobic monomer A' may be hydrolyzed, resulting in a pentapolymer which may be represented by the formula:

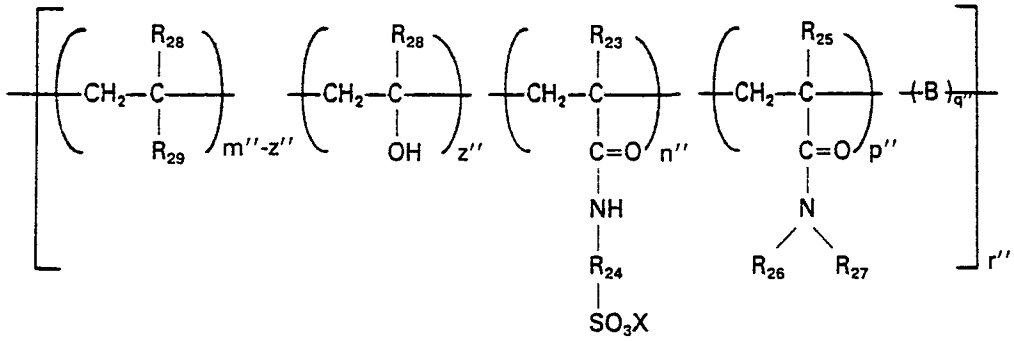

wherein $R_{23}$, $R_{24}$, $R_{25}$, $R_{26}$, $R_{27}$, $R_{28}$, $R_{29}$, X, m'', n'', p'' and r'' are as defined above, and z'' is from 0.1 to less than 10 mole% and wherein (m'' − z'') + z'' + n'' + p'' = 100 mole%;

Alternatively, instead of defining the tetrapolymer repeating units as above, the tetrapolymer (and its hydrolyzed derivative) may be defined as that resulting from the polymerization of a water-in-oil monomer emulsion containing from 0.1—20 mole%, preferably 0.2—10 mole% of monomer A', from 1—40 mole%, preferably from 5—20 mole%, of the $SO_3X$-containing monomer, from 20—96.9 mole%, preferably from 40—86.9 mole%, of monomer

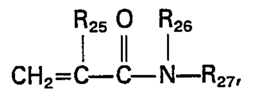

and greater than 0 to 40 mole%, preferably from 10—30 mole%, of monomer "B", all based on the total moles of monomer in the emulsion.

The most preferred tetrapolymer is that resulting from the polymerization of a water-in-oil monomer emulsion containing from 50—70 mole% of acrylamide monomer, from 6—10 mole% of sodium "AMPS" monomer, about 1—5 mole% vinyl acetate monomer and from 20—40 mole% of sodium acrylate monomer. Such tetrapolymers are especially useful in the flocculation of coal blackwater suspensions.

Polymerization of a water-in-oil monomer emulsion by the process of the present invention is superior to those processes mentioned in the prior art in many respects, including:

(1) The monomer emulsion is stabilized at the onset of the polymerization. It will not be degenerated by subsequent shearing and heating during the course of the polymerization.

(2) Product uniformity is greatly improved due to a quick fixing of the particle size at the beginning of the polymerization.

(3) Any tendency toward gel formation is minimized which significantly increases the reactor output by reducing the frequency for cleaning the reactor between batches.

(4) The improved monomer emulsion stability permits a greater flexibility in process design and a broader operating latitude; resulting in improved process safety and productivity.

The present invention is illustrated sometimes by comparison with prior art processes, by the following examples which describe work that was actually performed. These examples are meant to be illustrative only and are not intended to limit the invention thereby; rather, it is the intention that the invention be limited only by the scope of the claims appended hereto.

## Example 1

A sodium acrylate solution was prepared by neutralizing an acrylic acid solution (containing 237.3 g of acrylic acid and 278.55 g of deionized water) with about 332.25 g of a 48 weight% sodium hydroxide solution to a pH of 7.5. It was then combined with 308.55 g of crystalline acrylamide, 378 g of deionized water, and 0.09 g of sodium ethylenediamine tetraacetate (EDTA sodium salt) to give a homogeneous solution. An oil solution was prepared separately by dissolving 28.38 g of sorbitan monooleate (available from I.C.I. under its tradename Span-80) and 31.92 g of vinyl acetate into 509.25 g of an aliphatic hydrocarbon (available from Exxon Chemical Co. under its tradename Isopar-M). The resulting oil and aqueous solutions were combined and homogenized in a Waring blender to yield a uniform water-in-oil emulsion having a Brookfield viscosity of 790 centipoises (cps) (Model HBT, 10 RPM at 25°C).

The above monomer emulsion was transferred to a 3-liter, Pyrex glass reaction kettle, equipped with a turbine agitator, thermometer, condenser, addition funnel, gas inlet and outlet, and an external bath for either heating or cooling purposes. The monomer emulsion was deaerated by sparging with nitrogen at room temperature for about 45 minutes. Thereafter, an initiator solution containing 0.029 g of 2,2'-azobis-2(2,4-dimethyl-4-methoxyvaleronitrile) (available from the Du Pont Company under its tradename VAZO-33) in 1.4 g of toluene was quickly introduced. The reaction mixture was heated to about 40°C when a rapid exotherm began to take place. The reaction mixture was heated adiabatically until the temperature reached about 52°C, at which point a second initiator solution containing 0.234 g 2,2'azobis-(2,4-dimethylvaleronitrile) (available from the Du Pont Company under its tradename VAZO-52) in 11.27 g of toluene was

added through the addition funnel at a rate of 1.9 g per every 10 min. The resulting exotherm lasted for about an hour and during this period the polymerization temperature was maintained at 52 ± 2°C through external cooling and occasional air sparging. A nitrogen flow was maintained throughout the polymerization. After two additional hours of post heating the reactor was cooled to room temperature and an inhibitor solution containing 0.585 g of thiobisphenol (available from the Monsanto Co. under its tradename Santonox-R) in 15 g of toluene was added. The product was a milky, white, water-in-oil emulsion. The Brookfield viscosity of the emulsion was determined to be 1340 mPa.s (cps) (Model HBT, 10 RPM at 25°C). The resultant polymer was found to possess an intrinsic viscosity of 32.9 dl/g in 1N NaCl solution.

Example 2

The product prepared in Example 1 was dissolved in water with the aid of a small amount of a nonylphenol ethoxylate (10.5 moles of ethylene oxide) (available from Union Carbide Corporation under its tradename Tergitol NP—10) surfactant, by mixing 2.03 g of the polymer emulsion with 0.03 g of Tergitol NP—10 and a sufficient amount of deionized water to a total volume of 200 ml. After mixing, a viscous solution was obtained which possessed the following Brookfield viscosities:

3,040 mPa.s (centipoises) (Model HBT, 10 RPM, at 25°C)
39,800 mPa.s (centipoises) (Model LVT, 0.6 RPM, at 25°C)

Example 3

Example 1 was repeated with the exception that an aqueous solution of Acrylamide-50 (an acrylamide aqueous solution containing 50 weight percent actives) was substituted for the crystalline acrylamide and the total amount of deionized water charge was reduced so that the water phase/oil phase ratio remained identical in both preparations. Furthermore, the EDTA sodium salt was replaced with 0.218 g of pentasodium salt of diethylene triamine pentaacetic acid (available from Dow Chemical Co. under its tradename Versenex-80). The resultant polymer emulsion exhibited a Brookfield viscosity of 1,400 mPa.s (centipoises). The polymer possessed an intrinsic viscosity of 23.1 dl/g in 1N NaCl solution. An 0.3 weight percent solution of the polymer, prepared as in Example 2, showed the following Brookfield viscosities.

2,910 mPa.s (centipoises) (Model HBT, 10 RPM, at 25°C)
36,750 mPa.s (centipoises) (Model LVT, 0.6 RPM, at 25°C)

Examples 4—7

Example 3 was repeated with the exception that changes were made in initiators charged, amount of Versenex-80 used, and in polymerization temperature employed. These changes together with some characterizations of the finished products are compiled in Table III below. In all cases, gel-free polymer emulsions were obtained:

TABLE III

| Example No. | Initiator Charge (ppm) | | Versenex-80 Charge | Reaction T(°C) | 0.3% Solution Viscosity mPa.s (cps) | | I.V. (dl/g) |
|---|---|---|---|---|---|---|---|
| | VAZO-33 | VAZO-52 | (ppm/ppm Cu++) | | HBT | LVT | |
| 4 | 13.5 | 108 | 25 | 52 | 2,050 | 20,000 | 17.0 |
| 5 | 13.5 | 108 | 0 | 52 | 1,630 | 11,300 | 13.1 |
| 6 | 27 | 216 | 37.5 | 55 | 2,690 | 29,500 | 24.3 |
| 7 | 27 | 216 | 25 | 55 | 2,210 | 23,500 | 18.3 |

Examples 8—12

Example 3 was repeated with the exception that an ion-exchanged solution of acrylamide (Acrylamide-50 treated by with a Rohm and Haas IR—20 ion exchange resin) was employed and no chelating agent was employed in these preparations. Other changes and the properties of the resulting polymer are described in Table IV below. In all preparations, highly uniform, gel-free polymer emulsions were obtained:

TABLE IV

| Example No. | Initiator Charge (ppm) VAZO-33 | VAZO-52 | Maximum Exotherm T(°C) | 0.3% Solution Viscosity mPa.s (cps) HBT | LVT | I.V. (dl/g) |
|---|---|---|---|---|---|---|
| 8 | 3.3 | 160 | 52 | 2,400 | 24,500 | 22.6 |
| 9 | 6.8 | 133 | 48 | 2,040 | 17,130 | 16.7 |
| 10 | 14 | 130 | 53 | 2,430 | 24,000 | 18.7 |
| 11 | 27 | 136 | 55 | 2,430 | 25,500 | 22.4 |
| 12 | 54 | 217 | 57 | 2,340 | 21,750 | 20.7 |

Examples 13—28

Example 3 was repeated with the exception that a solution of acrylamide-50 was employed. Other changes in formulations and polymerization conditions, and the properties of the resulting polymers, are shown in Table V below. All preparations resulted in highly uniform, gel-free products.

TABLE V

| Example No. | Initiator Charge (ppm) VAZO-33 | VAZO-52 | Versenex-80 Charge (ppm/ppm Cu++) | Reaction T(°C) | 0.3% Solution Viscosity mPa.s (cps) HBT | LVT | I.V. (dl/g) |
|---|---|---|---|---|---|---|---|
| 13 | 6.75 | 108 | 28 | 56 | 3,520 | 44,500 | 24.9 |
| 14 | 33.75 | 216 | 14 | 52 | 2,180 | 17,200 | 16.9 |
| 15 | 6.75 | 216 | 14 | 56 | 2,110 | 16,300 | 16.9 |
| 16 | 6.75 | 108 | 14 | 52 | 1,950 | 14,300 | 16.2 |
| 17 | 33.75 | 216 | 28 | 56 | 3,460 | 38,500 | 26.1 |
| 18 | 33.75 | 108 | 28 | 52 | 3,330 | 43,100 | 28.5 |
| 19 | 6.75 | 216 | 28 | 52 | 3,590 | 43,650 | 26.4 |
| 20 | 33.75 | 108 | 14 | 56 | 2,210 | 15,630 | 16.5 |
| 21 | 33.75 | 108 | 14 | 52 | 2,110 | 16,700 | 16.3 |
| 22 | 33.75 | 216 | 14 | 56 | 2,050 | 14,630 | 16.0 |
| 23 | 6.75 | 216 | 28 | 56 | 2,390 | 43,250 | 23.9 |
| 24 | 33.75 | 216 | 28 | 52 | 2,980 | 30,700 | 24.5 |
| 25 | 33.75 | 108 | 28 | 56 | 3,040 | 26,500 | 21.4 |
| 26 | 6.75 | 216 | 14 | 52 | 2,110 | 17,200 | 17.2 |
| 27 | 6.75 | 108 | 28 | 52 | 3,520 | 45,250 | 25.5 |
| 28 | 6.75 | 108 | 14 | 56 | 1,950 | 14,700 | 16.3 |

Example 29

An aqueous solution and an oil solution prepared according to Example 4 were used in a series of shear rate and emulsion viscosity studies. The two phases were contained and blended in a variable speed Waring blender. Beginning from speed setting no. 1, the two phases were blended successively at each of the six speed settings for a period of 3 minutes and the resultant emulsion viscosities measured at 25°C. Separately, portions of the same aqueous and oil solutions were blended by a normal laboratory procedure to yield a monomer emulsion having a Brookfield viscosity of 670 mPa.s (centipoises). The monomer emulsion was polymerized using a dual-initiator system consisting of 13.5 and 40.5 ppm of VAZO-33 and VAZO-52, respectively.

Once the reaction mixture reached 50°C, the polymerization was quenched by air sparging and an external ice bath. An inhibitor solution containing Santonox-R and toluene was added. Using an isopropyl alcohol coagulation test, it was found that the quenched monomer emulsion had about 2% polymer conversion. The quenched monomer emulsion was then subjected to the same shear rate vs viscosity tests described above. The results are shown in Table VI below.

TABLE VI

| | Brookfield Viscosity (HBT, 10 RPM at 25°C) mPa.s (Centipoises) | |
|---|---|---|
| Blender Speed Setting | Freshly Prepared Monomer Emulsion | Quenched Monomer Emulsion |
| 1 | 470 | 990 |
| 2 | 850 | 970 |
| 3 | 1,165 | 990 |
| 4 | 890 | 960 |
| 5 | 235 | 950 |
| 6 | 175 | 920 |

The viscosity of the freshly prepared monomer emulsion was highly sensitive to shear. With increasing blending speeds, the monomer emulsion viscosity went through a maximum and then fell precipitously to a very low value. At this point, the monomer emulsion became very unstable. A phase separation usually occurred. The polymerization of an unstable monomer emulsion usually leads to a gel-contaminated, unsatisfactory product. Occasionally, total gelation of the batch resulted.

On the other hand, the quenched monomer emulsion which contained 2% of polymer exhibited a surprisingly good shear stability over the entire blender speed range. Not only did it withstand the high shear fields without breaking down, its viscosity was quite constant throughout the entire range. Since the emulsion viscosity of a water-in-oil emulsion is usually a measure of particle size and particle distribution, the results strongly suggest that redistribution in particle size would no longer take place once a few percent of polymer conversion has been effected. This is accomplished by the unique dual-initiator polymerization process of this invention.

Example 30

This example illustrates another unique feature of this invention; namely, that the polymer must be produced *in situ* to permit a satisfactory polymerization. Attempts to stabilize the monomer emulsion by introducing an external high molecular weight, water-soluble polymer prior to the emulsification, would hinder the ability to produce a satisfactory emulsion. An aqueous solution and an oil solution similar to those described in Example 3 were prepared. A polymer sample recovered from Example 8 was added to the aqueous phase to produce a concentration of 0.0018 weight percent. The polymer-doped aqueous solution and the oil solution were blended with a Waring blender. Emulsification was no longer possible using a variety of blending conditions. In all cases, phase separation occurred rapidly.

Example 31

An aqueous solution containing 106.97 g of Lubrizol 2405 (a 50% aqueous solution of 2-acrylamido-2-methylpropane sulfonic acid sodium salt), 239.8 g of Acrylamide-50, 0.207 g of Versenex-80 and 157.11 g of deionized water was mixed vigorously in a Waring blender with an oil solution containing 165.58 g of Isopar-M, 9.46 g of Span-80 and 1.6 g of vinyl acetate. The resulting water-in-oil monomer emulsion exhibited a Brookfield viscosity of 1,190 centipoises (Model HBT at 10 RPM at 25°C). The monomer

emulsion was transferred to a one-liter Pyrex-glass polymerization kettle equipped with a turbine agitator, a thermometer, a condenser, an addition funnel and a nitrogen (air) inlet and outlet. The reactor was deaerated by sparging with nitrogen at a rate of 400 ml/min, for a period of about 45 minutes. Thereafter, two solutions one consisting of 0.01 of sodium bisulfite in 2 ml of deionized water and the other containing 0.01 g of potassium persulfate in deionized water were introduced consecutively. An exotherm took place immediately. About 5 minutes after the initial exotherm, a toluene solution containing 0.148 of VAZO-52 in 7.51 g of toluene was added during a period of about one hour. The polymerization temperature was maintained at about 50°C by means of an external cooling bath and air injection. The polymerization was complete in about 3 hours and a solution of 0.164 g of Santonox-R in 5 g of toluene was introduced after discharging the product. The resultant product was a uniform water-in-oil emulsion which possessed a Brookfield viscosity of 1,330 mPa.s (centipoises) (Model HBT at 10 RPM at 25°C). The recovered polymer was found to have a 0.3 weight% solution viscosity of 9,800 mPa.s (centipoises) (Model LVT at 0.6 RPM at 25°C).

Example 32 (Prior Art)

Example 31 was repeated with the exception that the amounts of sodium bisulfite and potassium persulfate were increased from 0.01 to 0.316 and 0.079 g, respectively. The polymerization was allowed to proceed for a period of about 85 minutes before the addition of the VAZO-52 solution. Consequently, about 50% of polymer conversion had taken place at the point of the VAZO-52 addition. The polymerization was allowed to continue for an additional 3 hours. The resultant polymer emulsion was nonuniform and contained a noticeable amount of gel particles. The Brookfield viscosities of the polymer emulsion and the 0.3% polymer solution was 680 and 2,200 mPa.s (centipoises), respectively (measured as in Example 31). The aqueous solution contained visible insoluble polymeric particles.

Example 33

Example 1 was repeated with the exception that the VAZO-33 solution was replaced with a redox system consisting of two solutions, one containing 0.03 g of sodium bisulfite in 6 g of deionized water and the other containing 0.03 g of potassium persulfate in 6 g of deionized water. The exotherm took place at about 25°C upon the addition of the redox initiator system. About 30 minutes after the initial exotherm, the VAZO-52 solution was added and the exotherm continued for a period of about 100 minutes. After 2 hours of post-heating, a solution of 0.585 g of Santonox-R in 15 g of toluene was introduced before discharging the product. A uniform water-in-oil polymer emulsion was obtained. It possessed a Brookfield viscosity of 1,190 mPa.s (centipoises) (Model HBT at 10 RPM at 25°C). The recovered polymer exhibited a 0.3 weight% solution viscosity of 28,000 mPa.s (centipoises) (Model LVT at 0.6 RPM at 25°C).

**Claims**

1. A process for producing water-in-oil emulsions of a polymer from at least one ethylenically-unsaturated monomer comprising the steps of:

a) forming an aqueous phase comprising an aqueous solution containing at least one ethylenically-unsaturated, water-soluble monomer;

b) forming an oil phase comprising a hydrophobic liquid and an oil-soluble surfactant;

c) blending said aqueous phase and oil phase to form a water-in-oil emulsion of said monomer;

d) initiating polymerization of said monomer in said emulsion by heating said emulsion to a temperature of from 30°C to 60°C in the presence of a first polymerization initiator capable of initiating polymerization of said monomer at a temperature less than 45°C; and

e) after a shear-stable emulsion has been formed, completing said polymerization in the presence of a second polymerization initiator capable of initiating polymerization of said monomer at a second temperature which is both higher than 40°C and higher than said first temperature.

2. A process as claimed in claim 1 further characterised in that the polymerization temperature is controlled by continuously withdrawing a portion of the emulsion, circulating and cooling the withdrawn portion in an external heat exchanger and returning it to the reaction medium.

3. A process as claimed in claim 1 or claim 2, wherein said first initiator comprises a free-radical initiator capable of polymerizing said monomer at a temperature of from 0 to 45°C.

4. A process as claimed in any preceding claim wherein said second initiator comprises a free-radical initiator capable of polymerizing said monomer at a temperature of from 40 to 100°C.

5. A process as claimed in any one of the preceding claims wherein said oil phase also contains at least one hydrophobic monomer having a water solubility of less than 10 weight percent.

6. A process as claimed in claim 5 wherein said hydrophobic monomer is a vinyl ester, an alkyl acrylate, an alkyl methacrylate, a vinyl ether, acrylonitrile, styrene, N-vinyl carbazole, or a vinyl halide.

7. A process as claimed in any one of the preceding claims wherein said monomer is acrylic or methacrylic acid or a salt thereof; acrylamide, methacrylamide or a derivative thereof of the formula:

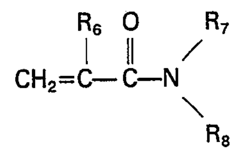

wherein $R_5$ is a hydrogen atom or a methyl group; $R_7$ is a hydrogen atom or an alkyl group having 1 or 2 carbon atoms; $R_8$ is an alkyl group having 1 or 2 carbon atoms or $—R_9—SO_3X$ wherein $R_9$ is a divalent hydrocarbon group having from 2 to 13 carbon atoms and X is a monovalent cation.

8. A process as claimed in any one of the preceding claims wherein said hydropholic liquid is benzene, xylene, toluene, a mineral oil, a kerosene, petroleum or a mixture thereof.

9. A process as claimed in any one of the preceding claims wherein said oil-soluble surfactant has a Hydrophile-Lipophile Balance (HLB) of from 1 to 10.

10. A process as claimed in any one of the preceding claims wherein said second temperature is higher than said first temperature by at least 5°C.

11. A process as claimed in any one of the preceding claims wherein said first initiator attains a half-life at temperature which is at least 20°C less than the temperature at which said second initiator attains the same half-life.

12. A process as claimed in any one of the preceding claims wherein said polymer is represented by the following formula:

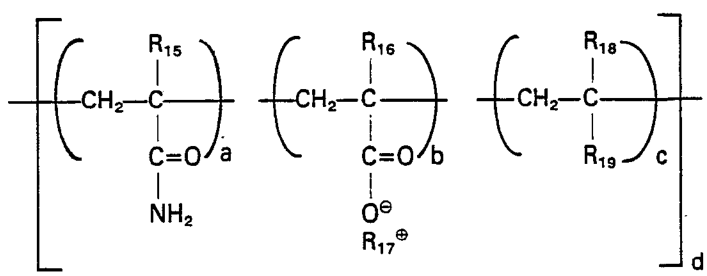

wherein $R_{15}$, $R_{16}$, and $R_{18}$ are each a hydrogen atom or a methyl group; $R^{+}_{17}$ is an alkali metal atom or an ammonium group, $R_{19}$ is $—OR_{20}$,

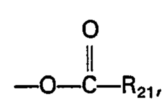

phenyl, substituted phenyl, —CN,

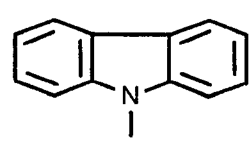 or 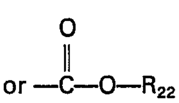

wherein $R_{20}$ is an alkyl group having up to 5 carbon atoms; wherein $R_{21}$ is a methyl or ethyl group, and wherein $R_{22}$ is an alkyl group having up to 8 carbon atoms; a is from 5 to 90 mole %, b is from 5 to 90 mole %, c is from 0.2 to 20 mole % with the proviso that a + b + c = 100 mole %; and d is an integer of from 1,000 to 5,000,000.

13. A process as claimed in claim 12 wherein said polymer is a terpolymer represented by the formula:

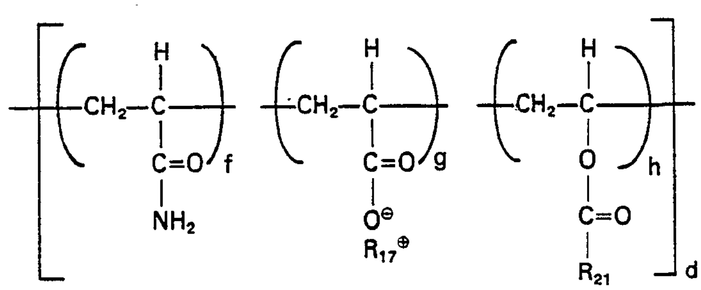

wherein $R_{17}$+ is Na+, or K+ or $NH_4$+; $R_{21}$ is a methyl, ethyl or butyl group; f is from 30 to 60 mole %, g is from 30 to 60 mole % and h is from 0.2 to 20 mole %, with the proviso that f + g + h = 100 mole %.

14. A process as claimed in any one of claims 1 to 11 wherein said polymer is represented by the following formula:

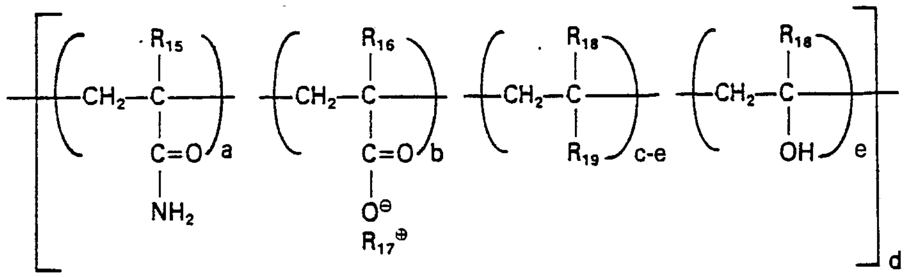

wherein $R_{15}$, $R_{16}$, $R^{+}_{17}$, $R_{18}$, $R_{19}$, a, b, c and d are as defined in Claim 11; wherein e is from 0.1 to less than 20 mole % and with the proviso a + b + (c—e) + e = 100 mole %.

15. A process as claimed in claim 14 wherein said polymer is represented by the formula:

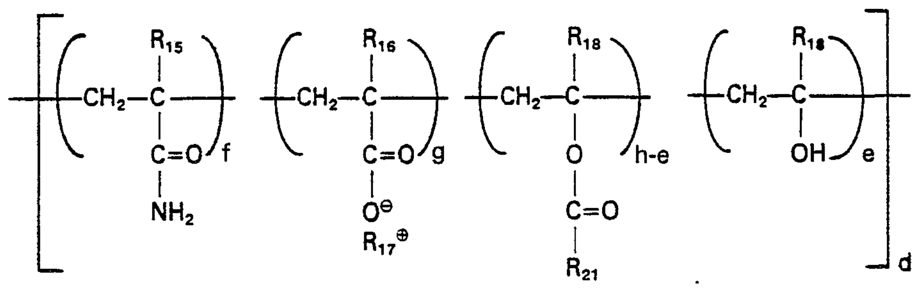

wherein $R_{15}$, $R_{16}$, $R^{+}_{17}$, $R_{18}$, $R_{21}$, d and e are as defined in Claim 13; wherein f is from 30 to 60 mole %, g is from 30 to 60 mole % and h is from 0.2 to 20 mole %, with the proviso that f + g + (h—e) + e = 100 mole %.

16. A process as claimed in any one of claims 1 to 11 wherein said polymer is represented by the formula:

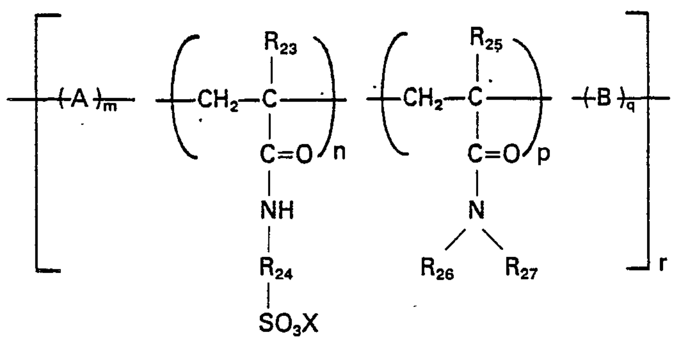

wherein A represents a repeating unit derived from a hydrophobic vinyl monomer having a water-solubility of less than 5 weight percent; $R_{23}$ and $R_{25}$ are each a hydrogen atom or a methyl group; $R_{26}$ and $R_{27}$ are each a hydrogen atom, a methyl group or an ethyl group; $R_{24}$ represents a divalent hydrocarbon group having from 2 to 13 carbon atoms; X represents a monovalent cation; B represents a repeating unit derived from an ethylenically-unsaturated carboxylic acid or a salt thereof; m is from 0.1 to 10 mole %, n is from 1 to 40 mole %, p is from 20 to 98.9 mole % and q is 0 to 40 mole %, with the proviso that m + n + p + q = 100 mole %; and r is a large positive integer.

17. A process as claimed in claim 16 wherein said polymer is a terpolymer represented by the formula:

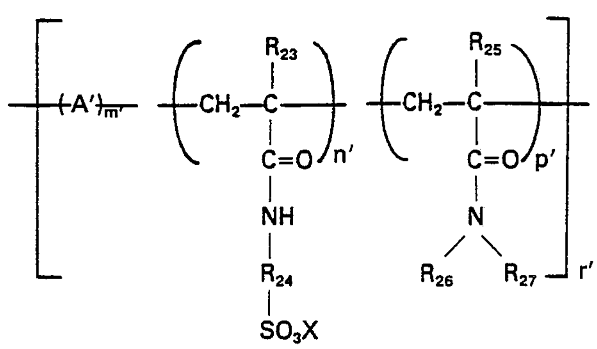

wherein A' represents

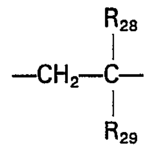

wherein $R_{23}$, $R_{25}$, $R_{26}$ and $R_{27}$ are as defined in claim 15, $R_{28}$ is $-H$ or $-CH_3$ and $R_{29}$ is

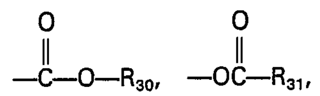

a halogen atom, $-O-R_{32}$, $-CN$ or

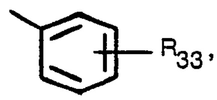

wherein $R_{30}$ is an alkyl group having from 1 to 12 carbon atoms, $R_{31}$ is an alkyl group having from 1 to 4 carbon atoms, $R_{32}$ is an alkyl group having from 1 to 6 carbon atoms, and $R_{33}$ is a hydrogen atom, a methyl group or an ethyl group; $R_{24}$ is an alkylene group having from 2 to 8 carbon atoms, a cycloalkylene group having from 6 to 8 carbon atoms or phenylene; X is a hydrogen atom, an ammonium group, an organoammonium group or an alkali metal atom, m' and n' are the same as m and n, respectively, and p' is from 50 to 98.9 mole %, wherein m' + n' + p' = 100 mole %; and wherein r' is a large positive integer such that the molecular weight of the polymer is greater than 500,000.

18. A process as claimed in claim 17 wherein said polymer is represented by the following formula:

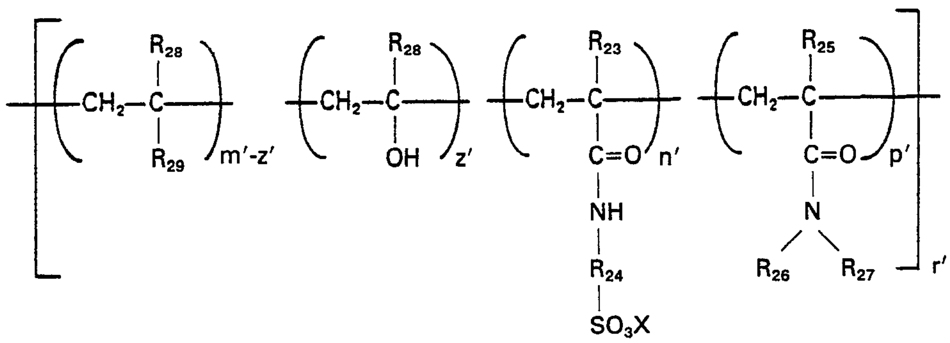

wherein $R_{23}$, $R_{24}$, $R_{25}$, $R_{26}$, $R_{27}$, $R_{28}$, $R_{29}$, X, m', n', p' and r' are as defined in Claim 16, and wherein z' is from 0.1 to less than 10 mole % and wherein (m'—z') + n' + p' + z' = 100 mole %.

19. A process as claimed in Claim 17 wherein said terpolymer comprises a polymer resulting from the polymerization of a water-in-oil monomer emulsion containing from 8—12 mole % sodium-2-acrylamido-2-methylpropane sulfonate monomer, from 87—91 mole % acrylamide monomer and from 1—5 mole % of vinyl acetate monomer.

20. A process as claimed in Claim 16 wherein said polymer is a tetrapolymer represented by the formula:

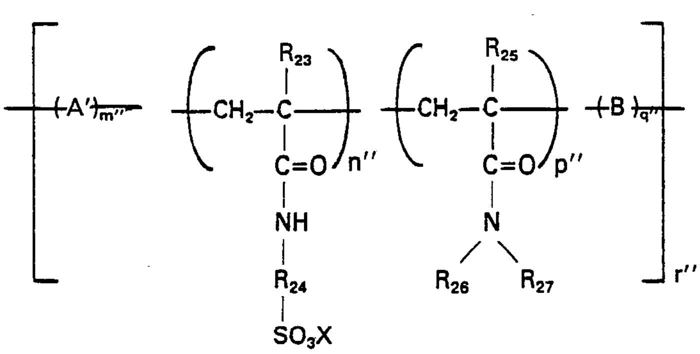

wherein A', $R_{23}$, $R_{24}$, $R_{25}$, $R_{26}$ and $R_{27}$ are as defined in Claim 15; wherein m'', n'' and r'' have the same meaning as m, n, and r, respectively; wherein p'' is from 20 to 96.9 mole %; wherein q'' is greater than 0 and up to 40 mole %, with the proviso that m'' + n'' + p'' + q'' = 100 mole %; and wherein B represents a repeating unit derived from acrylic or methacrylic acid, maleic acid, or an alkali metal salt thereof.

21. A process as claimed in Claim 20 wherein said tetrapolymer is hydrolyzed and is represented by the following formula:

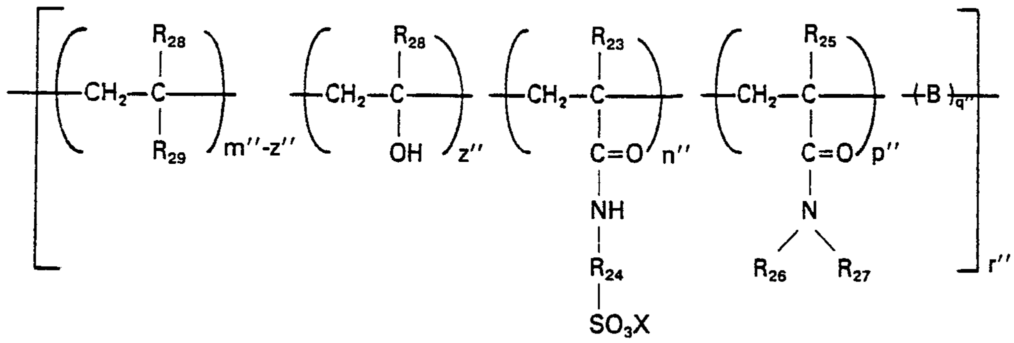

wherein $R_{23}$, $R_{24}$, $R_{25}$, $R_{26}$, $R_{27}$, $R_{28}$, $R_{29}$, X, B, m'', n'', p'', q'' and r'' are as defined in Claim 19; and wherein z'' is from 0.1 to less than 10 mole %, with the proviso that $(m''-z'') + n'' + p'' + q'' + z'' = 100$ mole %.

22. A process as claimed in Claim 20 wherein said tetrapolymer comprises a polymer resulting from the polymerization of a water-in-oil monomer emulsion containing from 6—10 mole % of sodium-2-acrylamido-2-methylpropane sulfonate monomer, from 50—70 mole % of acrylamide monomer, from 1—5 mole % of vinyl acetate monomer and from 20—40 mole % of sodium acrylate monomer.

23. The process of Claim 1 wherein said monomer comprises at least one monomer selected from the group consisting of (1) acrylic and methacrylic acid and salts thereof of the formula

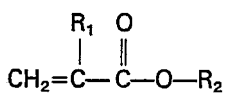

wherein $R_1$ is a hydrogen atom or a methyl group; $R_2$ is a hydrogen atom, an alkali metal atom, an ammonium group, an organoammonium group of the formula: $(R_3)(R_4)(R_5)\,NH^+$ wherein $R_3$, $R_4$ and $R_5$ are independently selected from a hydrogen atom, an alkyl group having from 1 to 3 carbon atoms, or a hydroxyalkyl group having 1 to 3 carbon atoms; (2) acrylamide and methacrylamide and derivatives thereof of the formula

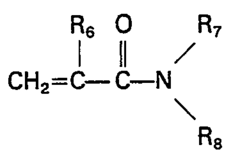

wherein $R_6$ is a hydrogen atom or a methyl group; $R_7$ is a hydrogen atom, a methyl group or an ethyl group; $R_8$ is a hydrogen atom, a methyl group, an ethyl group or $—R_9—SO_3X$, wherein $R_9$ is a divalent hydrocarbon group having 1 to 13 carbon atoms and X is a monovalent cation; (3) vinyl sulfonates; (4) olefinic dicarboxylic acids; and (5) less than 20 mole %, based on the total monomers, of vinyl monomers of the formula

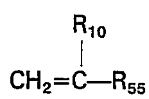

wherein $R_{10}$ is a hydrogen atom or a methyl group and $R_{11}$ is

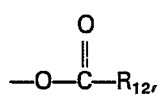

a halogen atom, $—O—R_{13}$, or

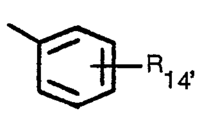

wherein $R_{12}$ is an alkyl group having from 1 to 8 carbon atoms, $R_{13}$ is an alkyl group having from 1 to 6 carbon atoms, $R_{14}$ is a hydrogen atom, a methyl group, an ethyl group or a halogen atom.

**Patentansprüche**

1. Verfahren zur Herstellung einer Wasser-in-Öl-Emulsion eines Polymers aus mindestens einem ethylenisch ungesättigten Monomer, das die Stufen umfaßt:

a) Bildung einer wässrigen Phase, die eine wässrige Lösung umfaßt, welche mindestens ein ethylenisch ungesättigtes, wasserlösliches Monomer enthält;

b) Bildung einer Ölphase, die eine hydrophobe Flüssigkeit und ein öllösliches, oberflächenaktives Mittel umfaßt;

c) Mischen der wässrigen Phase und der Ölphase zur Bildung einer Wasser-in-Öl-Emulsion des Monomers;

d) Einleiten der Polymerisation dieses Monomers in der Emulsion durch Erhitzen derselben auf eine Temperatur von 30 bis 60°C in Answesenheit eines ersten Polymerisationsinitiators, der die Polymerisation des Monomers bei einer temperatur unter 45°C einleiten kann, und

e) Beendigen der Polymerisation nach Bildung einer scherbeständigen Emulsion, und zwar in Anwesenheit eines zweiten Polymerisationsinitiators, der die Polymerisation des Monomers bei einer zweiten Temperatur einleiten kann, die sowohl höher als 40°C als auch höher als die erste Temperatur ist.

2. Verfahren nach Anspruch 1, dadurch gekennzeichnet, daß die Polymerisationstemperature durch kontinuierliches Abziehen eines Teils der Emulsion, Zirkulieren und Abkühlen des abgezogenen Teils in einem äußeren Wärmeaustaucher und Zurückführen desselben in das Reaktionsmedium geregelt wird.

3. Verfahren nach Anspruch 1 oder 2, in welchem der erste Initiator einen Initiator mit freien Radikalen umfaßt, der das Monomer bei einer Temperatur von 0 bis 45°C polymerisieren kann.

4. Verfahren nach irgendeinem der vorhegehenden Ansprüche, in welchem der zweite Initiator einen Initiator mit freien Radikalen umfaßt, der das Monomer bei einer Temperatur von 40 bis 100°C polymerisieren kann.

5. Verfahren nach irgendeinem der vorhegehenden Ansprüche, in welchem die Ölphase noch mindestens ein hydrophobes Monomer mit einer Wasserlöslichkeit von weniger als 10 Gew.-% umfaßt.

6. Verfahren nach Anspruch 5, in welchem das hydrophobe Monomer ein Vinylester, ein Alkylacrylat, ein Alkylmethacrylat, ein Vinylether, Acrylnitril, Styrol, N-Vinylcarbazol oder ein Vinylhalogenid ist.

7. Verfahren nach irgendeinem der vorhegehenden Ansprüche, worin das Monomer Acryl- oder Methacrylsäure oder ein Salz derselben, Acrylamid, Methacrylamid oder ein Derivat derselben mit der Formel

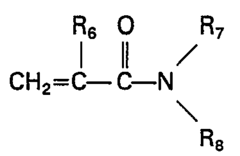

ist, worin $R_6$ ein Wasserstoffatom oder eine Methylgruppe ist, $R_7$ ein Wasserstoffatom oder eine Alkylgruppe mit 1 oder 2 Kohlenstoffatomen ist, $R_8$ eine Alkylgruppe mit 1 oder 2 Kohlenstoffatomen oder $-R_9-SO_3X$ ist, worin $R_9$ eine zweiwertige Kohlenwasserstoffgruppe mit 2 bis 13 Kohlenstoffatomen ist und X ein einwertiges Kation ist.

8. Verfahren nach irgendeinem der vorhegehenden Ansprüche, worin die hydrophobe Flüssigkeit Benzol, Xylol, Toluol, ein Mineralöl, ein Kerosin, Petroleum oder eine Mischung derselben ist.

9. Verfahren nach irgendeinem der vorhegehenden Ansprüche, worin das öllösliche, oberflächenaktive Mittel einen Hydrophil/Lipophil-Ausgleichswert (HLB) von 1 bis 10 hat.

10. Verfahren nach irgendeinem der vorhegehenden Ansprüche, in welchem die zweite Temperature um mindestens 5°C höher als die erste Temperatur ist.

11. Verfahren nach irgendeinem der vorhegehenden Ansprüche, in welchem der erste Initiator eine Halbwertzeit bei einer Temperatur erreicht, die mindestens 20°C unter der Temperatur liegt, bei welcher der zweite Initiator die gleiche Halbwertzeit erreicht.

12. Verfahren nach irgendeinem der vorhegehenden Ansprüche, in welchem das Polymer durch die folgende Formel dargestellt wird:

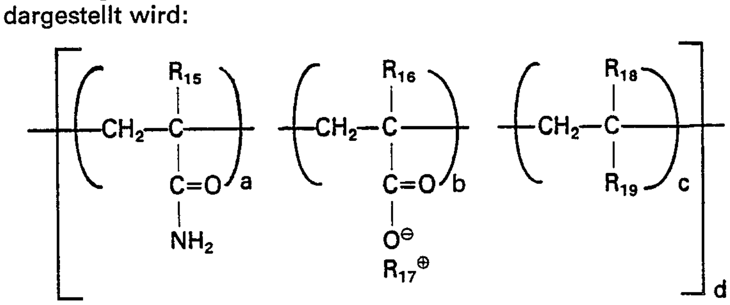

worin $R_{15}$, $R_{16}$ und $R_{18}$ jeweils ein Wasserstoffatom oder eine Methylgruppe sind, $R_{17}^{\oplus}$ ein Alkalimetallatom oder eine Ammonium-gruppe ist, $R_{19}$ —$OR_{20}$, —O—CO—$R_{21}$, phenyl, substituierts Phenyl, —CN,

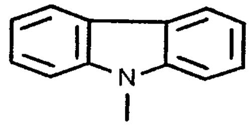

oder —CO—O—$R_{22}$ ist, worin $R_{20}$ eine Alkylgruppe mit bis zu 5 Kohlenstoffatomen ist, $R_{21}$ eine Methyl- oder Ethylgruppe und $R_{22}$ eine Alkylgruppe mit bis zu 8 Kohlenstoffatomen ist, a 5 bis 90 Mol-% ist, b 5 bis 90 Mol-% ist, c 0,2 bis 20 Mol-% ist, mit der Maßgabe, daß a + b + c = 100 Mol-% ist und d eine ganze Zahl von 1000 bis 5 000 000 ist.

13. Verfahren nach Anspruch 12, worin das Polymer ein Terpolymer der Formel:

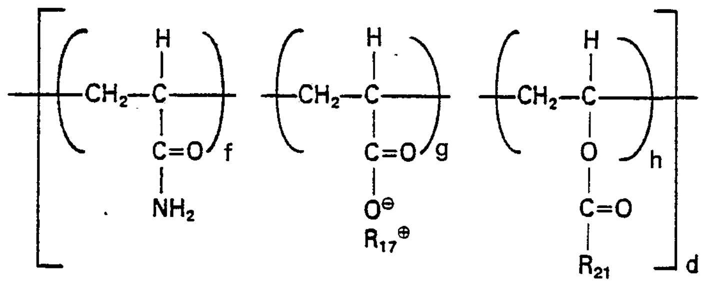

ist, worin $R_{17}^{\oplus}$ $Na^{\oplus}$ oder $K^{\oplus}$ oder $NH_4^{\oplus}$ ist, $R_{21}$ eine Methyl-, Ethyl- oder Butylgruppe ist, f 30 bis 60 Mol-% ist, g 30 bis 60 Mol-% ist und h 0,2 bis 20 Mol-% ist, mit der Maßgabe, daß f + g + h = 100 Mol-% ist.

14. Verfahren nach irgendeinem der Ansprüche 1 bis 11, in welchem das Polymer durch die folgende Formel dargestellt wird:

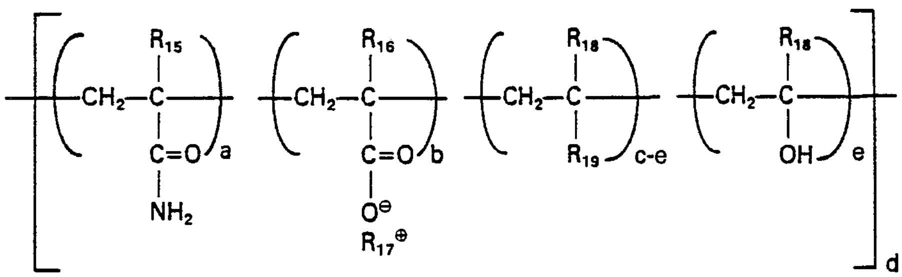

worin $R_{15}$, $R_{16}$, $R_{17}^{\oplus}$, $R_{18}$, $R_{19}$, a, b, c und d in Anspruch 11 definiert sind, e 0,1 bis weniger als 20 Mol-% ist, mit der Maßgabe, daß a + b + (c—e) + e = 100 Mol-% ist.

15. Verfahren nach Anspruch 14, in welchem das Polymer durch die Formel:

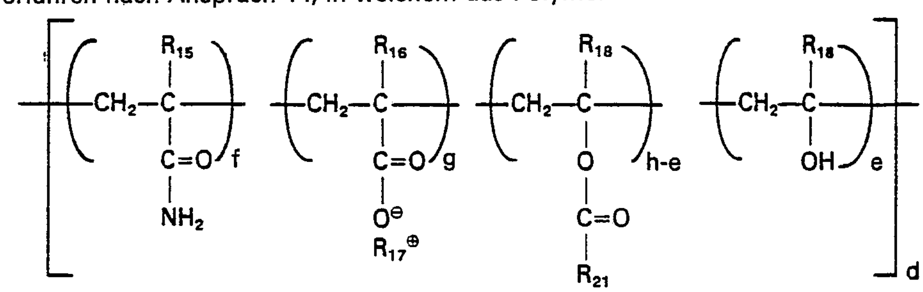

dargestellt wird, worin $R_{15}$, $R_{16}$, $R_{17}^{\oplus}$, $R_{18}$, $R_{21}$, d und e wie in Anspruch 13 definiert sind, f 30 bis 60 Mol-% ist, g 30 bis 60 Mol-% ist und h 0,2 bis 20 Mol-% ist, mit der Maßgabe, daß f + g + (H—e) + e = 100 Mol-% ist.

16. Verfahren nach irgendeinem der Ansprüche 1 bis 11, in welchem das Polymer durch die Formel:

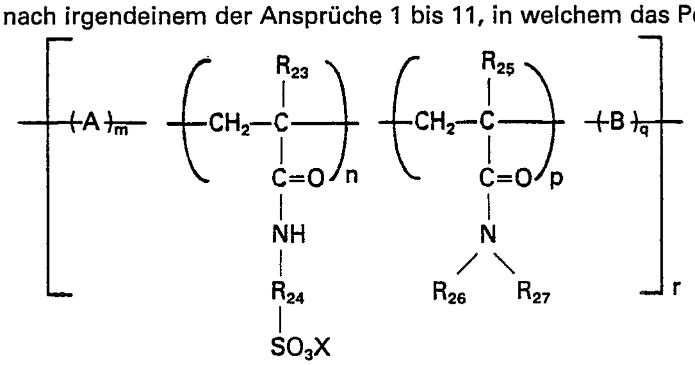

dargestellt wird, worin A eine wiederkehrende Einheit darstellt, abgeleitet von einem hydrophoben Vinylmonomer mit einer Wasserlöslichkeit von weniger als 5 Gew.-%; $R_{23}$ und $R_{25}$ jeweils ein Wasserstoffatom oder eine Methylgruppe sind, $R_{26}$ und $R_{27}$ jeweils ein Wasserstoffatom, eine Methyl- oder eine Ethylgruppe sind, $R_{24}$ eine zweiwertige Kohlenwasserstoffgruppe mit 2 bis 13 Kohlenstoffatomen bedeutet, X ein einwertiges Kation bedeutet, B eine wiederkehrende Einheit darstellt, abgeleitet von einer ethylenisch ungesättigten Carbonsäure oder einem Salz derselben, m 0,1 bis 10 Mol-% ist, n 1 bis 40 Mol-% ist, p 20 bis 98,9 Mol-% ist und q 0 bis 40 Mol-% ist, mit der Maßgabe, daß m + n + p + q = 100 Mol-% ist und r eine große ganze Zahl ist.

17. Verfahren nach Anspruch 16, in welchem das Polymer ein Terpolymer ist, dargestellt durch die Formel:

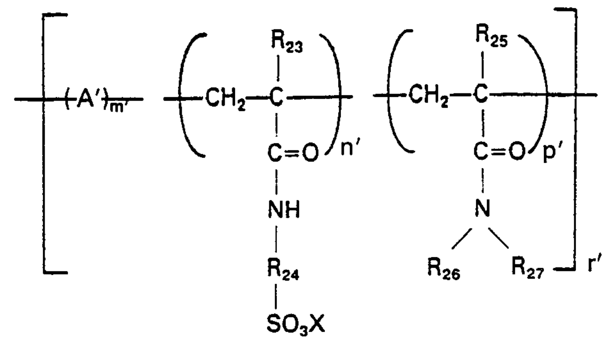

worin A'

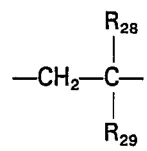

ist und $R_{23}$, $R_{25}$, $R_{26}$ und $R_{27}$ wie in Anspruch 15 definiert sind, wobei $R_{28}$ —H oder —$CH_3$ ist und $R_{29}$

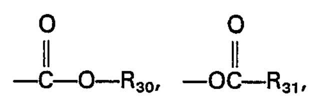

ein Halogenatom, —O—$R_{32}$, —CN oder

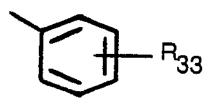

ist, worin $R_{30}$ eine Alkylgruppe mit 1 bis 12 Kohlenstoffatomen ist, $R_{31}$ eine Alkylgruppe mit 1 bis 4 Kohlenstoffatomen, $R_{32}$ eine Alkylgruppe mit 1 bis 6 Kohlenstoffatomen ist und $R_{33}$ ein Wasserstoffatom, eine Methyl- oder Ethylgruppe ist $R_{24}$ eine Alkylengruppe mit 2 bis 8 Kohlenstoffatomen, eine Cycloalkylengruppe mit 6 bis 8 Kohlenstoffatomen oder Phenylen ist, X ein Wasserstoffatom, eine Ammoniumgrupe, eine Organoammoniumgruppe oder ein Alkalimetallatom ist m' und n' die gleich Bedeuting wie m bzw. n haben und p' 50 bis 98,9 Mol-% ist, wobei m' + n' + p' = 100 Mol-% ist, und r' eine große ganze Zahl ist, so daß das Molekulargewicht des Polymers größer als 500 000 ist.

18. Verfahren nach Anspruch 17, in welchem das Polymer durch die folgenden Formel dargestellt wird:

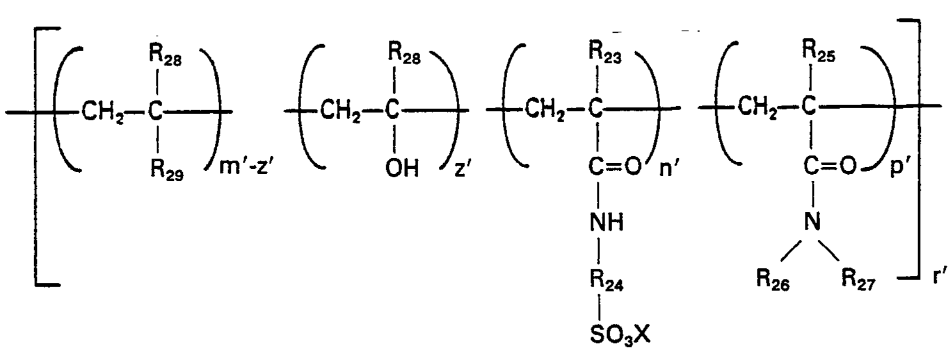

worin $R_{23}$, $R_{24}$, $R_{25}$, $R_{26}$, $R_{27}$, $R_{28}$, $R_{29}$, X, m', n', p' und r' wie in Anspruch 16 definiert sind und z' 0,1 bis weniger als 10 Mol-% ist und wobei (m'—z') + n' + p' + z' = 100 Mol-% ist.

19. Verfahren nach Anspruch 17, in welchem das Terpolymer ein Polymer umfaßt, das aus der Polymerisation einer Wasser-in-Öl-Monomeremulsion stammt, die 8 bis 12 Mol-% Natrium-2-acrylamido-2-methylpropansulfonatmonomer, 87 bis 91 Mol-% Acrylamidmonomer und 1 bis 5 Mol-% Vinylacetatmonomer enthält.

20. Verfahren nach Anspruch 16, in welchem das Polymer ein Tetrapolymer der Formel:

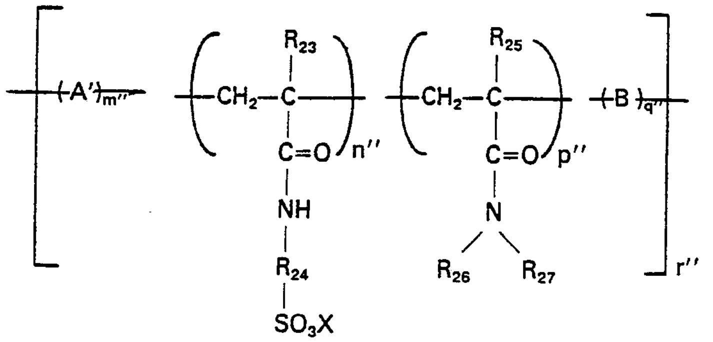

ist, worin A', $R_{23}$, $R_{24}$, $R_{25}$, $R_{26}$ und $R_{27}$ wie in Anspruch 15 definiert sind, m'', n'' und r'' die gleiche Bedeutung haben wie m, n bzw. r und p'' 20 bis 96,9 Mol-% ist, q'' größer als 0 und bis zu 40 Mol-% ist, mit der Maßgabe, daß m'' + n'' + p'' + q'' = 100 Mol-% ist, und worin B eine wiederkehrende Einheit dargestellt, die von Acryl- oder Methacrylsäure, Maleinsäure oder einem Alkalimetallsalz derselben abgeleitet ist.

21. Verfahren nach Anspruch 20, in welchem das Tetrapolymer hydrolysiert ist und durch die folgenden Formel dargestellt wird:

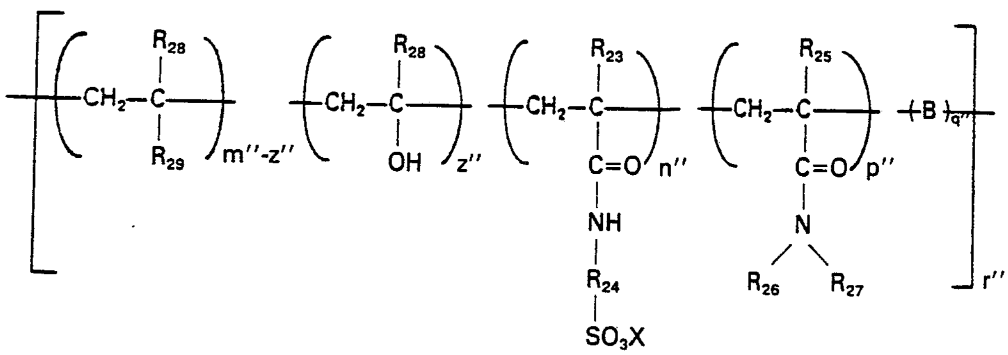

worin $R_{23}$, $R_{24}$, $R_{25}$, $R_{26}$, $R_{27}$, $R_{28}$, $R_{29}$, X, B, m'', n'', p'', q'' und r'' wie in Anspruch 19 definiert sind und worin z'' von 0,1 bis weniger als 10 Mol-% ist, mit der Maßgabe, daß (m''—z'') + n'' + p'' + q'' + z'' = 100 Mol-% ist.

22. Verfahren nach Anspruch 20, in welchem das Tetrapolymer ein Polymer umfaßt, das aus der Polymerisation einer Wasser-in-Öl-Monomeremulsion stammt, die 6 bis 10 Mol-% Natrium-2-acrylamido-2-methylpropansulfonatmonomer, 50 bis 70 Mol-% Acrylamidmonomer, 1 bis 5 Mol-% Vinylacetatmonomer und 20 bis 40 Mol-% Natrium-acrylatmonomer enthält.

23. Verfahren nach Anspruch 1, in welchem das Monomer mindestens ein Monomer umfaßt, ausgewählt aus der Gruppe, die aus (1) Acryl- und Methacrylsäure und Salzen derselben mit der Formel:

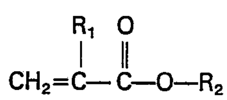

worin $R_1$ ein Wasserstoffatom oder eine Methylgruppe ist, $R_2$ ein Wasserstoffatom, ein Alkalimetallatom, eine Ammoniumgruppe, eine Organoammoniumgruppe der Formel $(R_3)(R_4)(R_5)NH^+$ ist, wobei $R_3$, $R_4$ und $R_5$ unabhängig auswählt sind aus einem Wasserstoffatom, einer Alkylgruppe mit 1 bis 3 Kohlenstoffatomen oder einer Hydroxyalkylgruppe mit 1 bis 3 Kohlenstoffatomen; (2) Acrylamid und Methacrylamid und Derivaten derselben mit der Formel:

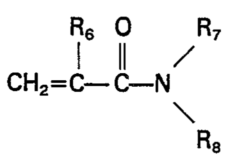

worin $R_6$ ein Wasserstoffatom oder eine Methylgruppe ist, $R_7$ ein Wasserstoffatom, einke Methyl- oder Ethylgrupe ist, $R_8$ ein Wasserstoffatom, eine Methylgruppe, eine Ethylgruppe oder $—R_9—SO_3X$ ist, wobei $R_9$ eine zweiwertige Kohlenwasserstoffgruppe mit 1 bis 13 Kohlenstoffatomen ist und X ein einwertiges Kation ist; (3) Vinylsulfonaten, (4) olefinischen Dicarbonsäuren und (5) weniger als 20 Mol-%, bezogen auf die gesamten Monomeren, eines Vinylmonomers der Formel:

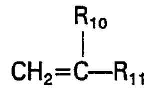

worin $R_{10}$ ein Wasserstoffatom oder eine Methylgruppe ist und $R_{11}$ $—O—CO—R_{12}$, ein Halogenatom, $—O—R_{13}$ oder

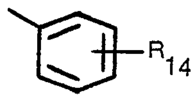

ist, wobei $R_{12}$ eine Alkylgruppe mit 1 bis 8 Kohlenstoffatomen ist, $R_{13}$ eine Alkylgruppe mit 1 bis 6 Kohlenstoffatomen ist, $R_{14}$ ein Wasserstoffatom, eine Methylgruppe, eine Ethylgruppe oder ein Halogenatom ist, besteht.

**Revendications**

1. Procédé de production d'émulsions eau-dans-huile d'un polymère à partir d'au moins un monomère à non-saturation éthylénique, qui comprend les étapes consistant:

a) à former une phase aqueuse constituée d'une solution aqueuse contenant au moins un monomère hydrosoluble à non-saturation éthylénique;

b) à former une phase d'huile comprenant un liquide hydrophobe et un surfactant soluble dans l'huile;

c) a mélanger ladite phase aqueuse et une phase d'huile pour former une èmulsion eau-dans-huile dudit monomère;

d) à déclencher la polymérisation dudit monomère dans ladite émulsion par chauffage de cette dernière à une température de 30 à 60°C en présence d'un premier initiateur de polymérisation capable de déclencher la polymérisation dudit monomére à une température inférieure à 45°C; et

e) après qu'une émulsion stable au cisaillement a été formée, à achever ladite polymérisation en présence d'un second initiateur de polymérisation capable de déclencher la polymérisation dudit monomére à une seconde température qui est à la fois supérieure à 40°C et supérieure à la première température.

2. Procédé suivant la revendication 1, caractérisé en outre en ce que la température de polymérisation est réglée par prélèvement continu d'une portion de l'émulsion, mise en circulation et refroidissement de la portion prélevée dans un échangeur de chaleur externe et retour de cette portion au milieu réactionnel.

3. Procédé suivant la revendication 1 ou la revendication 2, dans lequel le premier initiateur comprend un initiateur de radicaux libres capable de polymériser ledit monomère à une température de 0 à 45°C.

4. Procédé suivant l'une quelconque des revendications précédentes, dans lequel le second initiateur comprend un initiateur de radicaux libres capable de polymériser ledit monomère à une température de 40 à 100°C.

5. Procédé suivant l'une quelconque des revendications précédentes, dans lequel la phase d'huile contient aussi au moins un monomère hydrophobe ayant une solubilité dans l'eau de moins de 10% en poids.

6. Procédé suivant la revendication 5, dans lequel le monomère hydrophobe est un ester de vinyle, un acrylate d'alkyle, un méthacrylate d'alkyle, un éther de vinyle, l'acrylonitrile, le styrène, N-vinyl-carbazole ou un halogénure de vinyle.

7. Procédé suivant l'une quelconque des revendications précédentes, dans lequel le monomère est l'acide acrylique ou méthacrylique ou un sel de cet acide; l'acrylamide, le méthacrylamide ou un dérivé de ces composés de formule:

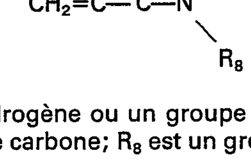

dans laquelle $R_6$ est un atome d'hydrogène ou un groupe méthyle; $R_7$ est un atome d'hydrogène ou un groupe alkyle ayant 1 ou 2 atomes de carbone; $R_8$ est un groupe alkyle ayant 1 ou 2 atomes de carbone ou un groupe $—R_9—SO_3X$ dans lequel $R_9$ est un groupe hydrocarboné divalent ayant 2 à 13 atomes de carbone et X est un cation monovalent.

8. Procédé suivant l'une quelconque des revendications précédentes, dans lequel le liquide hydrophobe est le benzène, le xylène, le toluène, une huile minérale, un kérosène, le pétrole ou un mélange de ces liquides.

9. Procédé suivant l'une quelconque des revendications précédentes, dans lequel le surfactant soluble dans l'huile a un équilibre hydrophile-lipophile (EHL) de 1 à 10.

10. Procédé suivant l'une quelconque des revendications précédentes, dans lequel la seconde température est supérieure d'au moins 5°C à la première.

11. Procédé suivant l'une quelconque des revendications précédentes, dans lequel le premier initiateur atteint sa demi-vie à une température qui est inférieure d'au moins 20°C à la température à laquelle le second initiateur atteint la même demi-vie.

12. Procédé suivant l'une quelconque des revendications précédentes, dans lequel le polymère est représenté par la formule suivante:

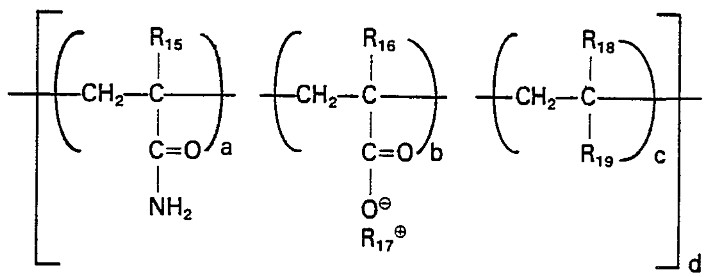

dans laquelle $R_{15}$, $R_{16}$ et $R_{18}$ représentent chacun un atome d'hydrogène ou un groupe méthyle; $R_{17}^{+}$ est un atome de métal alcalin ou un groupe ammonium, $R_{19}$ est un groupe $—OR_{20}$,

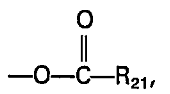

phényle, phényle substitué, —CN,

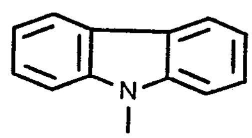 ou 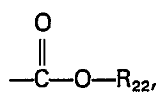

où $R_{20}$ est un groupe alkyle ayant jusqu'à 5 atomes de carbone; $R_{21}$ est un groupe méthyle ou éthyle et $R_{22}$ est un groupe alkyle ayant jusqu'à 8 atomes de carbone; a a une valeur de 5 à 90 moles %, b a une valeur de 5 à 90 moles %, c a une valeur de 0,2 à 20 moles % sous réserve que la somme a + b + c soit à égale à 100 moles %; et d est un nombre entier de 1000 à 500 000.

13. Procédé suivant la revendication 12, dans lequel le polymère est un terpolymère représenté par la formule:

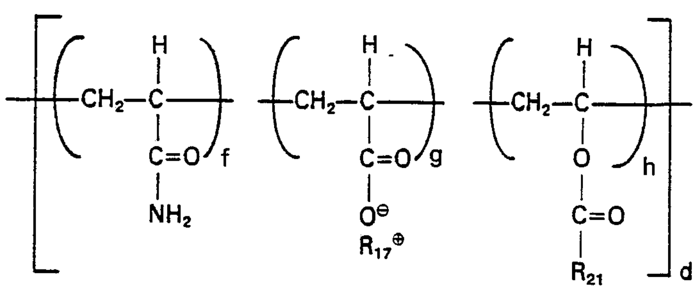

dans laquelle $R_{17}+$ est l'ion Na+; $R_{21}$ est un groupe méthyle, éthyle ou butyle; f a une valeur de 30 à 60 moles %, g a une valeur de 30 à 60 mole % et h a une valeur de 0,2 à 20 moles %, sous réserve que la somme f + g + h soit égale à 100 moles %.

14. Procédé suivant l'une quelconque des revendications 1 à 11, dans lequel le polymère est représenté par la formule suivante:

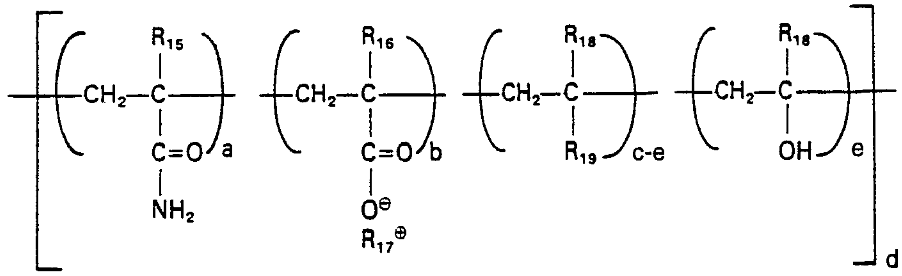

dans laquelle $R_{15}$, $R_{16}$, $R^{+}_{17}$, $R_{18}$, $R_{19}$, a, b, c et d sont tels que définis dans la revendication 11; e a une valeur de 0.1 à moins de 20 moles %, sous réserve que la somme a + b + (C—e) + e soit égale à 100 moles %.

15. Procédé suivant la revendication 14, dans lequel le polymère est représenté par la formule:

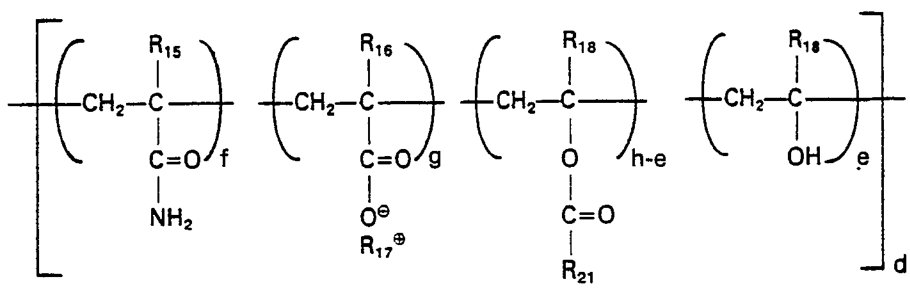

dans laquelle $R_{15}$, $R_{16}$, $R^{+}_{17}$, $R_{18}$, $R_{21}$, d et e sont tels que définis dans la revendication 13; f a une valeur de 30 à 60 moles %, g a une valeur de 30 à 60 moles % et h a une valeur de 0.2 à 20 moles %, sous réserve que la somme f + g + (H—e) + e soit égale à 100 moles %.

16. Procédé suivant l'une quelconque des revendications 1 à 11, dans lequel le polymère est représenté par la formule:

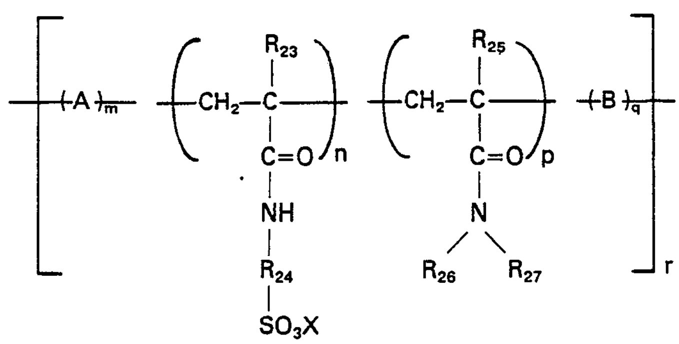

dans laquelle A représente un motif répété dérivé d'un monomère vinylique hydrophobe ayant une hydrosolubilité inférieure à 5% poids; $R_{23}$ et $R_{25}$ représentent chacun un atome d'hydrogène ou un groupe méthyle; $R_{26}$ et $R_{27}$ représentent chacun n atome d'hydrogène, un groupe méthyle ou un groupe éthyle; $R_{24}$ représente un groupe hydrocarboné divalent ayant 2 à 13 atomes de carbone; X représente un cation monovalent; B représente un motif répété dérivé d'un acide carboxylique à non-saturation éthylénique ou d'un sel de cet acide; m a une valeur de 0,1 à 10 moles %, n a une valeur de 1 à 40 moles %, p a une valeur de 20 à 98,9 moles % et q a une valeur de 0 à 40 moles %, sous réserve que la somme m + n + p + q soit égale à 100 moles %; et r est un grand nombre entier positif.

17. Procédé suivant la revendication 16, dans lequel le polymère est un terpolymère représenté par la formule:

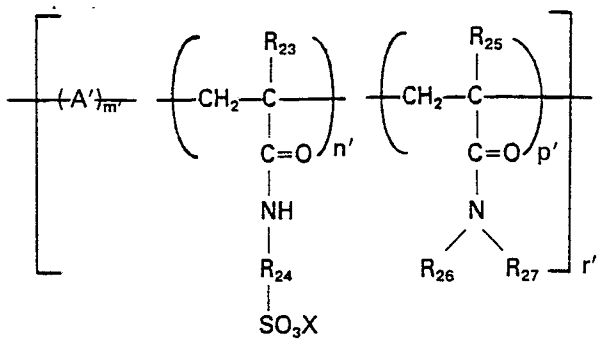

dans laquelle A′ représente

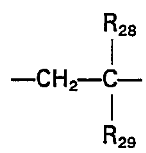

où $R_{23}$, $R_{25}$, $R_{26}$ et $R_{27}$ sont tels que définis dans la revendication 15, $R_{28}$ représente —H ou —$CH_3$ et $R_{29}$ représente

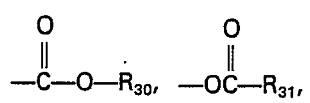

un atome d'halogène, —O—$R_{32}$, —CN ou

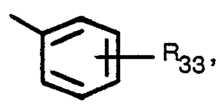

ou $R_{30}$ est un groupe alkyle ayant 1 à 12 atomes de carbone, $R_{31}$ est un groupe alkyle ayant 1 à 4 atomes de carbone, $R_{32}$ est un groupe alkyle ayant 1 à 6 atomes de carbone, et $R_{33}$ est un atome d'hydrogène, un groupe méthyle ou un groupe éthyle; $R_{24}$ est un groupe alkylène ayant 2 à 8 atomes de carbone, un groupe cyclo-alkylène ayant 6 à 8 atomes de carbone ou le groupe phénylène; X est un atome d'hydrogène, un groupe ammonium, un groupe ammonium organique ou un atome de métal alcalin, m′ et n′ sont respectivement identiques à m et n, et p′ a une valeur de 50 à 98,9 moles %, la somme m′ + n′ + p′ étant égale à 100 moles %; et r′ est un grand nombre entier positif tel que le poids moléculaire du polymère soit supérieur à 500 000.

18. Procédé suivant la revendication 17, dans lequel le polymère est représenté par la formule suivante:

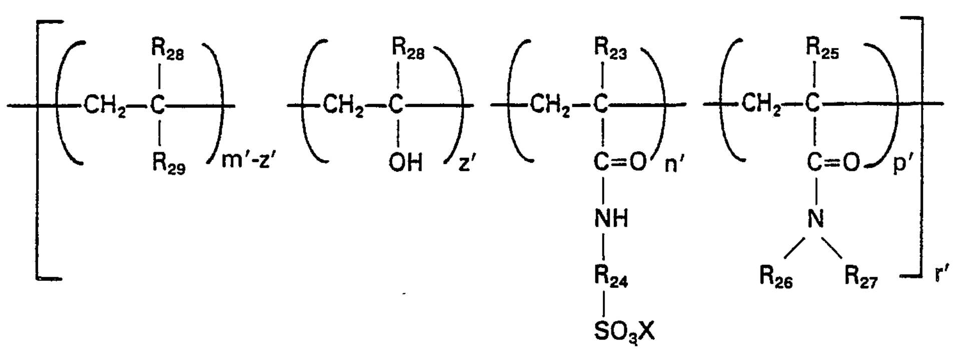

dans laquelle $R_{23}$, $R_{24}$, $R_{25}$, $R_{26}$, $R_{27}$, $R_{28}$, $R_{29}$, X, m′, n′, p′ et r′ sont tels que définis dans la revendication 16 et z′ a une valeur de 0,1 à moins de 10 moles % et la somme (m′—z′) + n′ + p′ + z′ est égale à 100 moles %.

19. Procédé suivant la revendication 17, dans lequel le terpolymère comprend un polymère qui résulte de la polymérisation d'une émulsion de monomère eau-dans-huile contenant 8 à 12 moles % de 2-

acrylamido-2-méthylpropanesulfonate de sodium monomère, 87 à 91 moles % d'monomère monomère et 1 à 5 moles % d'acétate de vinyle monomère.

20. Procédé suivant la revendication 16, dans lequel le polymère est un tétrapolymère représenté par la formule:

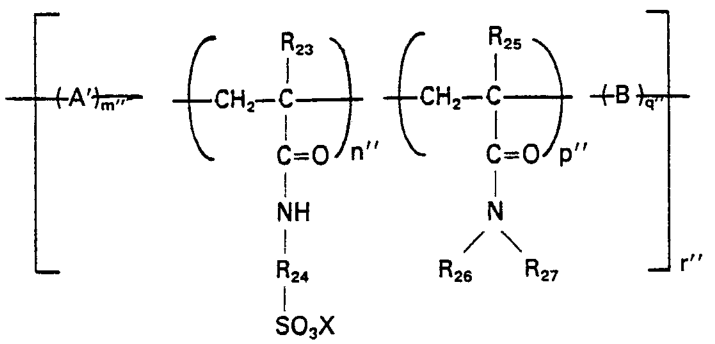

dans laquelle A', $R_{23}$, $R_{24}$, $R_{25}$, $R_{26}$ et $R_{27}$ sont tels que définis dans la revendication 15; m'', n'' et r'' ont les mêmes définitions respectives que m, n et r; p'' a une valeur de 20 à 96,9 moles %; q'' va d'une valeur supérieure à 0 jusqu'à 40 moles %, sous réserve que la somme m'' + n'' + p'' + q'' soit égale à 100 moles %; et B représente un motif répété dérivé d'acide acrylique o méthacrylique, d'acide maléique ou d'un sel de métal alcalin de cet acide.

21. Procédé suivant la revendication 20, dans lequel de tétrapolymère est hydrolysé et est représenté par la formule suivante:

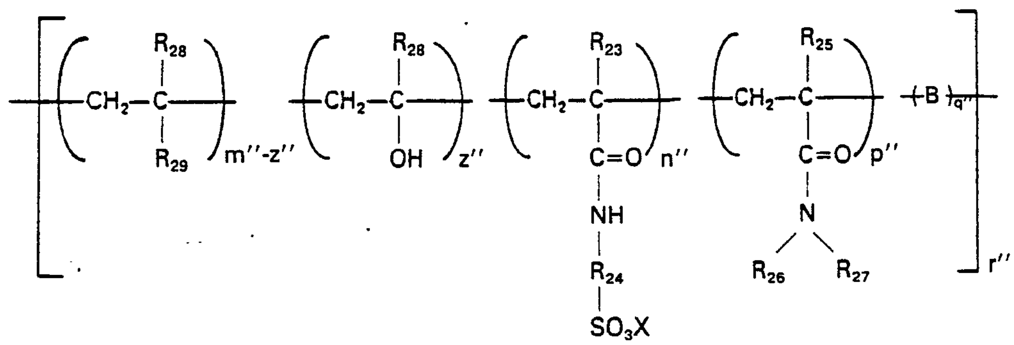

dans laquelle $R_{23}$, $R_{24}$, $R_{25}$, $R_{26}$, $R_{27}$, $R_{28}$, $R_{29}$, X, B, m'', n'', p'', q'' et r'' sont tels que définis dans le revendication 19; et z'' a une valeur de 0,1 à moins de 10 moles %, sous réserve que la somme (m''—z'') + n'' + p'' + q'' + z'' soit égale à 100 moles %.

22. Procédé suivant la revendication 20, dans lequel le tétrapolymère comprend un polymère qui résulte de la polymérisation d'une émulsion de monomère eau-dans-huile contenant 6 à 10 moles % de 2-acrylamido-2-méthylpropanesulfonate de sodium monomère, 50 à 70 moles % d'acrylamide monomère, 1 à 5 moles % d'acétate de vinyle monomère et 20 à 40 moles % d'acrylate de sodium monomère.

23. Procédé suivant la revendication 1, dans lequel le monomère comprend au moins un monomère choisi dans le groupe constitué par (1) les acides acrylique et méthacrylique et leurs sels de formule:

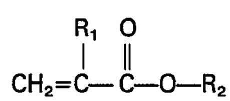

dans laquelle $R_1$ est un atome d'hydrogène ou un groupe méthyle; $R_2$ est un atome d'hydrogène, un atome de métal alcalin, un groupe ammonium, un groupe ammonium organique de formule $(R_3)(R_4)(R_5)NH^+$ dans laquelle $R_3$, $R_4$ et $R_5$ sont choisis, indépendamment, entre un atome d'hydrogène, un groupe alkyle ayant 1 à 3 atomes de carbone ou un groupe hydroxyalkyle ayant 1 à 3 atomes de carbone; (2) l'acrylamide et le méthylacrylamide et leurs dérivés de formule:

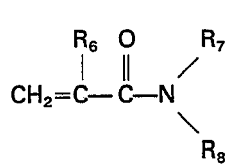

dans laquelle $R_6$ est un atome d'hydrogène ou un groupe méthyle; $R_7$ est un atome d'hydrogène, un groupe méthyle ou un groupe éthyle; $R_8$ est un atome d'hydrogène, un groupe méthyle, un groupe éthyle ou un groupe $—R_9—SO_3X$ dans lequel $R_9$ est un groupe hydrocarboné divalent ayant 1 à 13 atomes de carbone et X est un cation monovalent; (3) de vinyl-sulfonates; (4) d'acides dicarboxyliques oléfiniques; et (5) de moins de 20 moles %, sur la base des monomères totaux, de monomères vinyliques de formule:

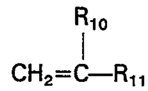

dans laquelle $R_{10}$ est un atome d'hydrogène ou un groupe méthyle et $R_{11}$ est un groupe

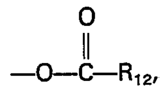

un atome d'halogène, un groupe $—O—R_{13}$, ou un groupe

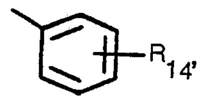

où $R_{12}$ est un groupe alkyle ayant 1 à 8 atomes de carbone, $R_{13}$ est un groupe alkyle ayant 1 à 6 atomes de carbone, $R_{14}$ est un atome d'hydrogène, un groupe méthyle, un groupe éthyle ou un atome d'halogène.